# EUROPÄISCHE PATENTSCHRIFT

(11) **EP 1 010 837 B1**
(45) Veröffentlichungstag und Bekanntmachung des Hinweises auf die Patenterteilung: **24.01.2007**
(21) Anmeldenummer: 99124794.1
(22) Anmeldetag: 14.12.1999
(51) Int. Cl.: E04G 1/15, B21D 39/03

(54) **Metall-Laufplanke**
Metal scaffold board
Plancher d'échafaudage métallique

(30) Priorität: 19.12.1998 DE 19858970
(43) Veröffentlichungstag der Anmeldung: 21.06.2000
(73) Patentinhaber: Wilhelm Layher Verwaltungs-GmbH, 74363 Güglingen-Eibensbach (DE)
(72) Erfinder: Langer, Carolin, 74363 Güglingen (DE); Layher, Georg, 74336 Brackenheim (DE)
(74) Vertreter: Geitz Truckenmüller Lucht

(56) Entgegenhaltungen:
- EP-A- 0 815 980
- DE-A- 2 916 826
- DE-A- 19 515 062
- DE-U- 29 715 272

## Beschreibung

Die Erfindung betrifft eine Laufplanke aus Metall für Gerüste, Konsolen, Podien und dgl.. Laufplanken mit den Merkmalen bzw. Teilmerkmalen des Oberbegriffs des Patentanspruches 1 sind seit vielen Jahren in großen Stückzahlen erfolgreich am Markt eingeführt.

Aus der DE-PS 29 16 826 sind Laufplanken aus Stahlblech oder Aluminiumblech bekannt, deren Querverstärkungsprofile als U- bzw. C-förmige Querkappen gestaltet sind. Diese weisen einen horizontalen Oberschenkel und einen horizontalen Unterschenkel sowie eine stirnseitige Vertikalwand auf. Der horizontale Oberschenkel liegt unterhalb der Lauffläche und der horizontale Unterschenkel liegt an der oberen Horizontalfläche des mehrfach abgekanteten Längsverstärkungsprofils der beiden seitlichen Längsholme an. An dem stirnseitigen Vertikalsteg des Abschlußprofils sind Einhängeklauen mittels Schweißen unter Ausbildung von Schweißnähten befestigt. Die Längsversteifungsprofile der Längsholme enden vor dem stirnseitigen Vertikalsteg der Querkappen in einem Abstand, der der Tiefe der Seitenlaschen etwa entspricht. Die Querkappen sind an den übrigen Gerüstboden-Profilteilen ebenfalls unter Ausbildung von Schweißnähten angeschweißt.

Bei aus der Praxis bekanntgewordenen Laufplanken gemäß dieser Patentschrift weisen die Abschlußprofile außer dem Oberschenkel und dem Unterschenkel jeweils einen vertikalen Seitenschenkel auf, die an der vertikalen Innenwand des Längsholmprofiles anliegen. Die Querkappen sind in die mit der horizontalen Lauffläche und den vertikalen Wandteilen der Längsholmprofile gebildeten Gerüstboden-Profilstrukturen eingesteckt. Die Querkappen sind durch Verschweißen in der Weise festgelegt, daß die stirnseitige Vorderkante der Lauffläche im Bereich der stirnseitigen Oberkante der Querkappen mit einer durchgehenden bzw. mehrfach unterbrochenen Schweißnaht festgelegt ist, daß die stirnseitigen Vertikalkanten der Längsholmprofile zumindest im Bereich des Überganges des stirnseitigen Vertikalwandteils des Abschlußprofils zu dem unteren Horizontal-Querschenkel mittels einer Schweißnaht festgelegt sind, daß die unteren Horizontal-Querschenkel der Querkappen im Bereich ihrer seitlichen Stirnkanten mit der horizontalen Unterkante des Längsholmprofiles mittels Schweißnähten festgelegt sind und daß die nach innen zur Längsmitte der Laufplanke weisenden Seitenlaschen an ihren vertikalen Stirnkanten mit den vertikalen Wandteilen der Längsholmprofile ebenfalls mittels Schweißnähten festgelegt sind. Dadurch ergibt sich eine steife rahmenartige Gerüstboden-Profilstruktur, die den im rauhen Praxisbetrieb auftretenden statischen und dynamischen Belastungen mit Sicherheit über lange Zeit standhalten. Diese Konstruktion weist unter vielerlei Gesichtspunkten Vorteile auf, insbesondere braucht sich das Abschlußprofil nicht über die ganze Höhe der Laufplanke zu erstrecken, da es nicht so hohen Biegebeanspruchungen ausgesetzt ist wie die Längsholme. Das Abschlußprofil braucht im wesentlichen nur die Einhängeeinrichtungen zu tragen und die auftretenden Kräfte zu übertragen. Auf diese Weise lassen sich Laufplanken mit unterschiedlich hohen Längsholmen mit gleichen, auf das Gerüstsystem abgestimmten Abschlußprofilen versehen und braucht nicht für unterschiedlich hohe Längsholme auch unterschiedlich hohe Abschlußkappen oder Abschlußprofile vorzusehen. Die an den Übergangsbereichen von den Querkappen zu den Längsprofilen und der Lauffläche auftretenden Beanspruchungen, insbesondere die dort auftretenden Zug-, Druck- und Scherbeanspruchungen werden vorteilhaft durch die spezielle Gestaltung der Querkappen und insbesondere deren Befestigung mittels der in spezieller Weise angeordneten Schweißnähte ermöglicht.

Während früher die Schweißnähte von Hand angebracht wurden, sind heute vollautomatische Schweißanlagen im Einsatz. Allerdings sind diese Anlagen teuer. Die bisherige Schweißtechnik erfordert die Zugabe von Schweißmaterial und beim Verschweißen können giftige Dämpfe entstehen, die durch entsprechend aufwendige Absauganlagen abgeführt werden müssen. Bei dem Schweißen unter Ausbildung von Schweißnähten mit Zugabe von Schweißgut läßt sich eine mehr als nur lokale Erwärmung und ein schweißbedingtes Verziehen der Bauteile nicht in jedem Fall vermeiden. Das Verschweißen von Aluminium-Bauteilen ist besonders schwierig.

Diese Schweißtechnik hat sich in vielen Bereichen in der Praxis erfolgreich bewährt. Allerdings erscheint der erforderliche Herstellungs-, Material- und Kostenaufwand nicht unwesentlich reduzierbar.

Aus der DE-OS 195 15 062 sind Gerüstböden aus Stahlblech mit den Merkmalen des Oberbegriffes des Patentanspruches 1 bekannt. Die dort verwendeten Querverbindungskappen weisen horizontale Oberschenkel, vertikale Seitenschenkel, horizontale Unterschenkel und eine Vertikal-Außenwand auf. Die Querverbindungskappen sind mittels Hohl-, Abreiß-, oder Blindnieten mit der übrigen Gerüstboden-Profilstruktur verbunden. Dadurch läßt sich eine Verbindung der Querverbindungskappen mit den übrigen Gerüstboden-Profilteilen ohne Schweißung und damit lokale Überwärmung herstellen sowie bei geringem Gewicht, guter Stabilität für großen Längen und geringer Stapelhöhe den praktischen Bedürfnissen entsprechend optimiert gestaltet. Die genannten Kleinfügemittel müssen zur Montage durch an geeigneten Stellen der Querverbindungskappe und der Bodenprofilstruktur angebrachte Durchgangsbohrungen gesteckt werden und anschließend mit einem üblichen Umformvorgang umgeformt werden. Diese an sich günstige und seit vielen Jahren auch im Gerüstbau erfolgreich eingesetzte Verbindungstechnik erfordert jedoch zusätzliche Aufwendungen durch das Anbringen der Durchgangsbohrungen an hierfür geeigneten Stellen. Die Herstellung der Laufplanken ist relativ aufwendig. Denn die Querverbindungskappen müssen relativ zu den übrigen Gerüstboden-Profilteilen, insbesondere relativ zur Lauffläche und den Längsholmen mittels geeignet gestalteter Zusatzvorrichtungen genau positioniert werden, damit die an den gegenüberliegenden Wandteilen vorgesehenen Durchgangsbohrungen genau fluchten. Andernfalls ist das Durchstecken der Kleinfügeteile behindert oder überhaupt nicht möglich.

Gemäß dieser Druckschrift gestaltete, aus der Praxis bekannte Gerüstböden, sind beiderseits mit holmartigen Randprofilen gestaltet. Diese weisen unten liegende Längsverstärkungsholme, mit viertel- bzw. halbkreisförmig ausgebildeten Profil-Segmenten auf. Die Längsverstärkungsholme sind ferner mit einem unteren, sich in Längsrichtung erstreckenden Horizontal-Wandteil gebildet. Die Halbkreis- bzw. Viertelkreis-Profil-Segmente der Längsverstärkungsprofile enden in einem bestimmten Abstand vor den unteren horizontalen Querschenkeln der Querverbindungskappen. Der untere Horizontal-Wandteil der Längsverstärkungsprofile ist ebenengleich in Richtung auf das stirnseitige Ende der Gerüstböden weitergeführt. Der untere Horizontal-Wandteil der Längsverstärkungsholme greift dabei in einem schmalen und kurzen Überdeckungsbereich über die Außenfläche des unteren horizontalen Querschenkels des Querverbindungsprofils, wobei der Längs-Überdeckungsabstand kleiner ist als die Hälfte der Tiefe der Querschenkel. In diesem Überdeckungsbereich ist der Horizontal-Wandteil des Längsverstärkungsprofils mit dem Unterschenkel der Querverbindungskappe mit einem Blindniet befestigt, der durch beidseitig angebrachte Durchgangsbohrungen gesteckt und nachträglich verformt ist. Der Überdeckungsbereich ist zu klein, um mehr als einen Blindniet in tragfähigem Abstand sicher befestigen zu können. Ferner ist keine hinreichende Kraftüberleitung bzw. -Aufnahme bei Gerüstböden mit höheren Längsholmen bzw. mit von der Lauffläche relativ weit beabstandeten Längsverstärkungsprofilen möglich, die größeren Belastungen über längere Zeit sicher standhalten sollen. Die ebene Weiterführung des Horizontal-Wandteils des Längsverstärkungsprofils kann eine unnötige Gewichtserhöhung der Laufplanke bedeuten. Eine an den praktischen Anforderungen orientierte, kostengünstige und den jeweiligen Spannungs- und Kraftübertragungsverhältnissen angepaßte Gestaltung des Verbindungsbereiches bei Gerüstböden mit unterschiedlich hohen Längsholmen bei gleichbleibender Höhe der Querprofilkappen ist mit dieser Konstruktion nicht möglich.

Es sind ferner aus Aluminiumblech gebildete Laufplanken bekannt, die in vielen Merkmalen ähnlich gestaltet sind wie die Laufplanken gemäß der DE-PS 29 16 826. Die dabei vorgesehenen U- bzw. C-förmig gestalteten Querkappen weisen einen horizontalen Oberschenkel und einen horizontalen Unterschenkel auf. Seitenschenkel sind nicht vorgesehen. Die Querkappen sind mit den übrigen Gerüstboden-Profilteilen mit Hilfe von Blindnieten befestigt, die durch Durchgangslöcher der benachbarten Wandteile gesteckt und nachträglich umgeformt sind. Die Lauffläche ist mit den horizontalen oberen Querschenkeln der Querkappen mit sechs Blindnieten befestigt. Vier der Blindnieten sind im Bereich der vorderen Stirnkante der Laufflächen in einer Querreihe angeordnet und hinter den in den seitlichen Randbereichen angeordneten Blindnieten ist in Längsrichtung versetzt jeweils ein weiterer Blindniet vorgesehen.

Die Querkappen sind mit den beiden Längsholmen jeweils unter Verwendung eines separaten L-förmig ausgebildeten Winkel-Blechteils durch Blindnieten verbunden. Das Winkel-Blechteil liegt mit seinem Vertikalschenkel an der äußeren Oberfläche des vertikalen Wandteils der Längsholme an und übergreift mit seinem Unterschenkel die äußeren seitlichen Wandteilbereiche des unteren Horizontal-Querschenkels der Abschlußkappe. Zwischen dem Unterschenkel des Winkel-Blechteils und dem unteren Horizontal-Querschenkel des Abschlußprofils ist ein beidseitig jeweils an diesen Schenkeln anliegender horiontaler Wandteil des Längsverstärkungsprofils der Längsholme ausgebildet. Dadurch liegen in diesem Verbindungsbereich drei Wandteile übereinander. Diese sind mittels Blindnieten miteinander verbunden, die durch geeignete Durchgangsbohrungen hindurchgesteckt und nachträglich umgeformt sind. Das Winkel-Blechteil weist eine Breite auf, die eine in Längsrichtung der Gerüstböden versetzte Anordnung jeweils zweier Blindnieten ermöglicht. Die Breite des Winkel-Blechteiles entspricht etwa der Tiefe des unteren horizontalen Querschenkels der Abschlußkappe.

Die Herstellung dieser Gerüstböden ist aufwendig. Die Winkel-Blechteile erfordern eine separate Fertigung, Lagerung sowie Zuführung. Die genaue Positionierung der Winkel-Blechteile relativ zu den übrigen Gerüstboden-Profilteilen ist ebenfalls aufwendig. Dadurch daß der Unterschenkel des Winkel-Blechteils nicht direkt auf der Oberfläche des unteren Horizontal-Querschenkels der Abschlußkappen aufliegt, sondern der horizontale Wandteil der Längsverstärkungsprofile zwischen diesen mitbefestigt ist, sind für die Herstellung dieser Gerüstböden entweder unterschiedlich lange Nieten erforderlich, was einen erhöhten Herstellungs- und Logistikaufwand bedeutet oder müssen sämtliche Blindnieten die gleiche einheitliche Länge aufweisen, was einen unnötigen Materialeinsatz und zusätzliches Gewicht bedeutet.

In allen vorgenannten Konstruktionen sind die als Einhängeklauen gestalteten Einhänge-Hilfsmittel an den stirnseitigen Vertikalwandteilen der Querverbindungsprofile unter Ausbildung von Schweißnähten angeschweißt.

Es sind ferner Gerüstböden mit einer Lauffläche und mit untere Längsversteifungsprofile aufweisenden seitlichen Längsholmen trägerartigen Querschnitts bekannt, die einstückig aus Stahl oder Aluminium ausgebildet sind. In die dadurch gebildete Gerüstboden-Profilstruktur sind jeweils stirnseitig U- bzw. C-förmig gestaltete Abschlußkappen aus Stahl eingesteckt. Diese weisen einen horizontalen Oberschenkel, einen horizontalen Unterschenkel, zwei vertikale Seitenschenkel und ein stirnseitiges vertikales Wandteil auf. Die Seitenschenkel der Abschlußkappen weisen eine Einstecklänge auf, die etwa der 3-fachen Gesamthöhe der Laufplanke entspricht. Dadurch weisen diese Gerüstböden ein relativ großes Gewicht auf. Die Seitenschenkel der Abschlußkappen sind mit den Vertikalwänden der Längsholme mit Hilfe von Verbindungsmitteln befestigt, die mit einer Kalt-Setz-Fügetechnik unter Umformung der aneinanderliegenden Wandteile ausgebildete Verbindungsstrukturen aufweisen.

Die Kalt-Setz-Füge-Verbindungsstrukturen weisen von den vorderen Stirnkanten der Lauffläche bzw. der Längsholme einen relativ großen Abstand auf, der der Höhe der Längsholme bzw. der vertikalen Wandteile der Querkappen entspricht. Dadurch ist am stirnseitigen Ende der Laufplanken keine optimale Kraftaufnahme und -übertragung möglich. Bei hoher Belastung und/oder bei Belastung über lange Zeit können unerwünschte Werkstoffschädigungen bzw. Rißbildungen auftreten. Die Beanspruchbarkeit dieser Laufplanken ist deshalb begrenzt. Die Ober- und Unterschenkel der Querkappen sind nicht mit der Lauffläche und den Längsholmen verbunden. Auch dadurch ist die Belastbarkeit dieser Gerüstböden begrenzt.

Die Längsverstärkungsprofile sind durch mehrmaliges Abkanten derart ausgebildet, daß im unteren horizontalen, auch der Abstützung aufeinander gestapelter Gerüstböden dienenden Wandteil-Bereich zwei Wandteile parallel aneinanderliegen. Der innen liegende Wandteil reicht nur etwa bis zur Quermitte des darunter liegenden horizontalen Wandteils des Längsverstärkungsprofiles. Dadurch ist das Anbringen von Verbindungsmitteln in diesem Bereich nicht möglich bzw. ist keine günstige Anordnung derselben möglich.

Die bei diesen Laufplanken in Kalt-Setz-Fügetechnik ausgebildeten Verbindungsstrukturen weisen an der äußeren freien Oberfläche scharfkantige Wulstränder auf. Dies bedeutet eine nicht unerhebliche Verletzungsgefahr für das Montagepersonal.

Ferner sind in jüngerer Zeit Gerüstböden aus Stahlblech bekannt geworden, die eine horizontale Lauffläche und mit dieser einstückig durch Abkanten gebildete Längsholme aufweisen. Die Längsholme sind mit einstückig durch Abkanten ausgebildeten, querschnittlich geschlossenen kastenförmigen Längsverstärkungsprofilen gestaltet. Diese sind mit einem äußeren Vertikal-Wandteil, einem unteren, parallel zur Lauffläche ausgebildeten Horizontal-Wandteil und einer schräg nach oben zur Gerüstmitte geneigten Schrägwand sowie einem sich daran anschließenden, schmalen, an der Unterfläche der Lauffläche anliegenden Horizontal-Wandteil ausgebildet. Dieser Horizontal-Wandteil der Längsverstärkungsprofile ist mit der Lauffläche durch Verbindungsmittel verbunden, deren Verbindungsstrukturen mit Hilfe einer Kalt-Setz-FügeTechnik ausgebildet und in Gerüstboden-Längsrichtung in einer Reihe hintereinander angeordnet sind. An den Stirnseiten der Gerüstböden können Querverbindungsprofile vorgesehen sein, welche horizontale Ober- und Unterschenkel aufweisen. Die Ober- bzw. Unterschenkel und die korrespondierenden Horizontal-Flächen der Laufflächen und des Längsverstärkungsprofils weisen Durchgangsbohrungen auf, durch die geeignete Nieten hindurchgesteckt und nachträglich umgeformt werden müssen.

Andere, aus der Praxis bekannte Laufplanken sind ebenfalls mit einer horizontalen Lauffläche und seitlichen durch Abkanten gebildeten Randholmen ausgebildet. Diese weisen an ihrem unteren Längsrand durch Abkanten gebildete Längsverstärkungsprofile mit unteren aufeinanderliegenden Horizontal-Wandteilen auf. Zwischen den beiden Randholmen sind Längsverstärkungsrippen vorgesehen, die ebenfalls durch Abkanten der Lauffläche gebildet sind, sich vertikal nach unten erstrecken und jeweils T-förmig umgebördelte untere horizontale Verstärkungsrippen aufweisen. Zwischen die Lauffläche und die Längsholme ist eine Querverbindungskappe mit drei oberen, jeweils in Querrichtung beabstandeten Horizontal-Querschenkeln und den beiderseits abgekanteten Seitenschenkeln eingesteckt. Die Querverbindungskappe weist ferner zwei horizontale Unterschenkel auf. Diese liegen an den unteren horizontalen Oberflächen der Verstärkungsrippen der T-förmig ausgebildeten Längsverstärkungsstege an. Die horizontalen Oberschenkel, die horizontalen Unterschenkel und die Seitenschenkel sind jeweils durch zwei beabstandet angeordnete Verbindungsmittel mit den Laufflächenteilen bzw. den vertikalen Wandteilen der Randholme bzw. den unteren horizontalen Wandteilen der Verstärkungsstege der T-förmigen Längsverstärkungsstege verbunden. Die Verbindungsmittel sind mit Verbindungsstrukturen gestaltet, die durch Einprägen gebildet sind.

Die Querkappen weisen im Bereich der Randholme keine unteren Horizontal-Querschenkel auf. Die Horizontal-Wandteile der unten abgekanteten Längsverstärkungsprofile der Längsholme reichen bis an das stirnseitige Ende der Gerüstböden. Eine unter Spannungs- und Kraftangriffs- bzw. -übertragungs-Gesichtspunkten optimierte Befestigung ist in diesem Bereich nicht möglch. Dadurch sind diese Gerüstböden nur zur Aufnahme geringer Belastungen geeignet.

An den Querkappen sind stirnseitig drei Einhängehaken vorgesehen, die einstückig durch Abkanten und nachträglicher Preß-Strukturverformung ausgebildet sind. Diese Querkappen sind aufwendig in der Herstellung. Die Einhängehaken sind strukturweich ausgebildet, so daß bei dynamischer Belastung ein elastisches Federn der ganzen Laufplanke auftreten kann.

Der Erfindung liegt die Aufgabe zugrunde, Laufplanken der eingangs genannten Art unter vielgestaltigen Gesichtspunkten günstiger zu gestalten, insbesondere die Verbindung der Querversteifungsprofile mit den übrigen Gerüstboden-Profilteilen bei vollautomatischer Fertigungsmöglichkeit unter Berücksichtigung der sich aus den seitherigen Herstellungsgegebenheiten ergebenden Randbedingungen und des seitherigen, auf die Gerüst-Rastermaße abgestimmten Baukastensystems bei geringem Gewicht der Laufplanken ohne Einbuße der mit Sicherheit über lange Zeit ertragbaren Belastbarkeit im Hinblick auf die im rauhen Praxisbetrieb auftretenden statischen sowie dynamischen Beanspruchungen günstiger zu gestalten.

Dies wird erfindungsgemäß durch die Merkmale des Patentanspruches 1, insbesondere dadurch gelöst, daß
- wenigstens einer der sich gegenüberliegenden Wandteile vor dem Verbinden im Verbindungsbereich vorlochungs- und/oder vortrennfrei ausgebildet ist, wobei
- die Verbindungsmittel zur Verbindung der Querversteifungsprofile mit den Längsholmen und/oder dem Laufflächenblech unmittelbar mit elektrisch und/oder durch Druckkräfte induziertem Heiß- bzw. Kalt-Werkstoff-Fließen zumindest einer der Wandteile gebildeten, vollautomatisiert herstellbaren Verbindungsstrukturen ausgebildet sind und wobei;
- die Überlappungsbereiche und benachbarte Wandteile hinsichtlich der Zügänglichkeit der Fügewerkzeuge eine automatische Fertigung ermöglichende Gestaltung und Anordnung aufweisen und wobei
- die Längsholme an ihrem stirnseitigen Ende eine sich unterhalb des Laufflächenbleches in Querrichtung erstreckende, mit den Längsholmen einteilig gebildete und von dem Längsversteifungsprofil räumlich getrennte Verbindungslasche aufweisen,
- die mit dem Unterschenkel des Querversteifungsprofils mit wenigstens einem der die Verbindungsstrukturen aufweisenden Verbindungsmittel fest verbunden ist.

Dadurch, daß wenigstens einer der sich gegenüberliegenden Wandteile vor dem Verbinden im Verbindungsbereich vorlochungs- und/oder vortrennfrei ausgebildet ist, wird eine günstige Herstellungsmöglichkeit durch Einsparen von sonst erforderlichen zusätzlichen Arbeitsgängen erreicht. Dadurch, daß die Verbindungsmittel zur Verbindung der Querversteifungsprofile mit den Längsholmen und/oder der Lauffläche unmittelbar mit elektrisch und/oder im wesentlichen durch Druckkräfte induziertem Heiß- bzw. Kalt-Werkstoff-Fließen zumindest einer der Wandteile gebildeten Verbindungsstrukturen ausgebildet sind, die vollautomatisiert herstellbar sind, lassen sich giftige Dämpfe und aufwendige Absauganlagen sowie ein schweißflußbedingtes Verziehen der relativ dünnen Blech-Wandteile vermeiden. Durch diese Maßnahmen ist der Herstellungs-, Material- und Kostenaufwand nicht unwesentlich reduziert. Die Herstellung der Laufplanken ist auch deshalb günstiger, weil die Querversteifungsprofile relativ zur Lauffläche und den Längsholmen nicht exakt positioniert werden müssen, um ein bestimmungsgemäßes Anbringen der Verbindungsmittel zu ermöglichen. Dadurch, daß die Längsholme an ihrem stirnseitigen Ende eine sich unterhalb der Lauffläche in Querrichtung erstreckende, mit den Längsholmen einteilig gebildete und von dem Längsversteifungsprofil räumlich getrennte Verbindungslasche aufweisen, die mit dem Unterschenkel des Querversteifungsprofiles mit wenigstens einem der die Verbindungsstrukturen aufweisenden Verbindungsmittel fest verbunden ist, läßt sich eine besonders herstellungs- und kostengünstige, den in praxi auftretenden Spannungs- und Kraftübertragungsverhältnissen angepaßte Gestaltung des für die Gesamtsteifigkeit und die Rahmenbildung der Laufplanke wichtigen Stirn- und Eckverbindungsbereiches, insbesondere bei Laufplanken mit einer üblichen Laufflächenbreite von wenigstens 300 mm erzielen. Dadurch lassen sich große Belastungen über lange Zeit sicher aufnehmen und übertragen, wobei die Gestaltung, Lage und Anordnung der Verbindungslasche unter Beibehalt der sich aus den seitherigen Herstellungsgegebenheiten ergebenden Randbedingungen und des auf die Gerüstrastermaße abgestimmten Baukastensystems bei geringem Gewicht der Laufplanken in Verbindung mit der vorteilhaften Gestaltung und Anordnung der Überlappungsbereiche benachbarter Wandteile eine kostengünstige automatische Fertigung bei günstiger Zugänglichkeit der Fügewerkzeuge ermöglicht. Vorteilhafterweise sind auch der Oberschenkel mit der Lauffläche und die Seitenschenkel mit den Längsholmen jeweils mit wenigstens einem der die Verbindungsstrukturen aufweisenden Verbindungsmittel fest verbunden. Dadurch läßt sich eine besonders günstige und stabile Verbindung des Querversteifungsprofils mit den übrigen Gerüstboden-Profilteilen unter Ausbildung einer steifen Rahmenbildung erreichen, welche durch Verwendung eines einheitlichen, vollautomatischen Fügeverfahrens eine besonders herstellungs- und kostengünstige Laufplanken-Konstruktion ohne Einbuße der mit Sicherheit über lange Zeit ertragbaren Belastbarkeit ermöglicht.

Zweckmäßigerweise weist die Verbindungslasche und der Unterschenkel eine aufeinander abgestimmte Fügefläche auf, die das gleichzeitige oder sequentiell beabstandete Anbringen von wenigstens zwei der Verbindungsstrukturen ermöglicht. Dadurch lassen sich auf engem Raum in Anzahl und Anordnung auf die lokal herrschenden Spannungs- und Kraftübertragungsverhältnisse abgestimmte Verbindungsstrukturen auch unter Verwendung einheitlicher Fügewerkzeuge anbringen. Dies bedeutet ferner den Vorteil von hinsichtlich Größe und Ausbildung einheitlichen Verbindungsstrukturen, welche eine exakte rechnerische Spannungs- und Beanspruchungsanalyse mittels moderner Rechenmethoden erleichert bzw. erst sinnvoll möglich macht.

Wenn alle sich jeweils gegenüberliegenden Wandteile Fügeflächen aufweisen, die so aufeinander abgestimmt gestaltet sind, daß sie das gleichzeitige oder sequentiell beabstandete Anbringen von wenigstens zwei der Verbindungsstrukturen ermöglichen, sind die vorstehenden Vorteile in besonderem Maße erreichbar.

Vorteilhafterweise sind die Fügeflächen der sich gegenüberliegenden Wandteile in den jeweiligen Verbindungsbereichen vor dem Verbinden im wesentlichen parallel und eben gestaltet. Dies erleichert das Anbringen der Verbindungsstrukturen bei leichter Zugängigkeit der Fügewerkzeuge und ermöglicht strukturell besonders günstig ausgebildete Verbindungsstrukturen.

Vorteilhafterweise ist die stirnseitige Vorderkante der Verbindungslasche im Bereich des stirnseitigen Endes des Unterschenkels des Querversteifungsprofiles ausgebildet und vorzugsweise sind die Verbindungsstrukturen im wesentlichen im Bereich der stirnseitigen Enden der Längsholme vorgesehen. Diese Maßnahmen ermöglichen eine unter Spannungsgesichtspunkten besonders günstige Übertragung der Kräfte von dem Querversteifungsprofil auf die übrige Laufplanken-Profilstruktur. Besonders günstige Kraftangriffs- bzw. Übertragungsmöglichkeiten und/oder günstige Werkstoffausnutzungs- und Spannungsverhältnisse bei geringem Gewicht der Laufplanken ergeben sich auch alleine oder in Kombination mit den nachstehend aufgeführten Maßnahmen. Dementsprechend kann vorgesehen sein, daß die Verbindungslasche eine Breite bzw. Tiefe aufweist, die der Tiefe bzw. Breite des Unterschenkels etwa entspricht. Ferner kann vorgesehen sein, daß die Verbindungslasche trapezförmig gestaltet ist, und zwar mit einer im Übergangsbereich zu den benachbarten Wandteilen des Längsholmes angeordneten Trapez-Basiskante, deren Breite etwa der Tiefe des Unterschenkels des Querversteifungsprofils entspricht sowie mit einer schräg nach vorn ausgebildeten Trapez-Schrägkante. Dabei sind zweckmäßigerweise die Übergänge der Trapezkanten sowie der Übergangsbereich der Verbindungslasche zu den anschließenden Wandteilen des Längsholmes abgerundet gestaltet. Ferner ist es vorteilhaft, wenn die Verbindungslasche den Unterschenkel des Querversteifungsprofils untergreift.

Ferner kann vorgesehen sein, daß die Querversteifungsprofile mit wenigstens zwei in Richtung der Längsachse der Laufplanke beabstandeten, die Verbindungsstrukturen aufweisenden Verbindungsmitteln mit der Verbindungslasche verbunden sind. Eine diesbezüglich besonders günstige Anordnung und Lage der Verbindungsstrukturen ergibt sich, wenn diese einen Abstand zueinander aufweisen, der dem 10- bis 15-fachen der Wandstärke der Verbindungslasche und/oder der Wandstärke des Querversteifungsprofils im Überlappungsbereich entspricht. Alternativ oder in Kombination zu dieser Maßnahme kann vorgesehen sein, daß die benachbarten Verbindungsstrukturen einen Abstand zueinander aufweisen, der etwa dem 0,4 bis 0,5-fachen der Tiefe des Unterschenkels des Querversteifungsprofiles entspricht. Ferner kann vorgesehen sein, daß die Verbindungsstrukturen symmetrisch zur Querachse des Querversteifungsprofils angeordnet sind und/oder von den vertikalen Außenflächen der Längsholme einen Abstand aufweisen, der etwa dem Abstand zwischen den benachbarten Verbindungsstrukturen entspricht. Zweckmäßigerweise sind die Seitenschenkel und/oder die Querschenkel rechteckförmig gestaltet. Die Verbindung der Seitenschenkel des Querversteifungsprofiles mit den Längsholmen erfolgt vorteilhafterweise mit drei dreieckförmig zueinander angeordneten Verbindungsstrukturen, wobei zweckmäßigerweise zwei der drei Verbindungsstrukturen etwa parallel zur Längsachse der Laufplanke ausgerichtet und unterhalb der dritten Verbindungsstruktur angeordnet sind. Dabei kann zweckmäßigerweise vorgesehen sein, daß die beiden unteren Verbindungsstrukturen einen Abstand voneinander aufweisen, der etwa der Tiefe der Unterschenkel des Querversteifungsprofiles entspricht und/oder daß die stirnseitig angeordnete Verbindungsstruktur von dem stirnseitigen Ende des Seitenschenkels des Querversteifungsprofiles einen Abstand aufweist, der etwa dem Abstand der dritten Verbindungsstruktur von den beiden unteren Verbindungsstrukturen entspricht. Alternativ oder in Kombination hierzu kann vorgesehen sein, daß die beiden unteren Verbindungsstrukturen von der unteren Kante der Seitenschenkel bzw. der Unterschenkel des Querversteifungsprofils einen Abstand aufweisen, der dem Abstand der stirnseitigen Verbindungsstruktur vom stirnseitigen Ende der Seitenschenkel etwa entspricht.

Besonders vorteilhaft ist es, wenn die drei zur Verbindung der Seitenschenkel mit den Längsholmen vorgesehenen Verbindungsstrukturen so angeordnet sind, daß ein gleichseitiges Dreieck gebildet ist.

Die Verbindung des Oberschenkels mit dem Laufflächenblech erfolgt zweckmäßigerweise mit drei parallel zur Stirnkante der Lauffläche und in einer Reihe angeordneten Verbindungsstrukturen, die zweckmäßigerweise von der Stirnkante der Lauffläche einen Abstand aufweisen, der etwa dem 6- bis 9-fachen der Wandstärke der Lauffläche im Verbindungsbereich entspricht.

Vorteilhafterweise sind die Verbindungsmittel zur Verbindung der Querversteifungsprofile mit den Längsholmen und/oder dem Laufflächenblech unmittelbar mit im wesentlichen durch Druckkräfte induziertem Kalt-Werkstoff-Fließen jedes der Wandteile gebildeten, vollautomatisiert herstellbaren Verbindungsstrukturen ausgebildet. Dadurch kann eine thermische Beeinflussung oder Schädigung, beispielsweise eine Versprödung der Werkstoffe der zu verbindenden Wandteile oder ein thermisch bedingter Verzug der Wandteile vermieden werden. Giftige Gase oder Dämpfe können nicht entstehen, so daß auch keine aufwendigen Absaugeinrichtungen erforderlich sind. Ferner lassen sich Blechdicken-Schwankungen einfach kompensieren und es können auch Blech-Wandteile mit unterschiedlichen Blechdicken und/oder unterschiedlichen Werkstoffen zu hochfesten und dauerhaften Verbindungen gefügt werden. Schließlich ist es dadurch möglich, nicht nur unbeschichtete Wandteile zu fügen, sondern auch oberflächenvergütete bzw- veredelte, beispielsweise metall- oder kunststoff-beschichtete und/oder lackierte Blech-Wandteile sowie Bleche mit Sandwichstruktur sicher und dauerhaft zu verbinden. Ggf. kann auch eine Oberflächenvorbehandlung, wie beispielsweise ein Entfetten der zu fügenden Wandteile entfallen. Dadurch, daß die zu verbindenden Wandteile vor dem Fügevorgang mit geeigneten Oberflächenbeschichtungen versehen sein können, kann eine konservierende Nacharbeit, insbesondere im Verbindungsbereich, beispielsweise durch Aufbringen von Zinkfarbe entfallen.

Wenn jeder der zu verbindenden, gegenüberliegenden Wandteile mit den durch Druckkräfte induzierten Kalt-Werkstoff-Fließen gebildeten Verbindungsstrukturen versehen ist, lassen sich Verbindungen mit einer noch größeren statischen und dynamischen Festigkeit erzielen.

Zweckmäßigerweise stehen die Verbindungsstrukturen nicht über die außen liegende freie Oberfläche der miteinander verbundenen Wandteile hervor. Dies erleichtert die Handhabung der Laufplanken und verhindert Verletzungen durch hervorstehende Verbindungsstrukturen bzw. Fügeteile. Dies gilt in besonderem Maße für den Fall, daß die Verbindungsstrukturen auch nicht über die innen liegende freie Oberfläche der miteinander verbundenen Wandteile hervorstehen.

Vorteilhafterweise sind die Verbindungsstrukturen mit Hintergreifstrukturen ausgebildet, welche vorzugsweise einen die Ränder der außen liegenden Wandteile hintergreifenden Schließkopf aufweisen. Dies ermöglicht eine statisch und dynamisch dauerhafte, feste und optisch prüfbare Verbindung mit hohem Rationalisierungspotential durch die vollautomatisiert herstellbaren Verbindungsstrukturen. Diese sind hierfür zweckmäßigerweise druckknopfartig ausgebildet.

Vorteilhafterweise sind die sich gegenüberliegend überlappenden Wandteile aus unterschiedlichen Werkstoffen gebildet, vorzugsweise aus Stahl oder Leichtmetall, insbesondere aus Aluminium. Dies ermöglicht eine große Flexibilität bei der werkstoffspezifischen Funktionsoptimierung von Wandteilbereichen.

Zweckmäßigerweise sind die Wandteile auch im Verbindungsbereich vor dem Verbinden mit einer Oberflächen-Vergütung bzw. -Beschichtung versehen. Dies erlaubt eine rationelle Herstellung der zu verbindenden Wandteile, welche vor dem Verbinden problemlos zwischengelagert werden können, ohne daß beispielsweise Korrosionsprobleme auftreten.

Zweckmäßigerweise sind die mit der Oberflächen-Vergütung bzw. -Beschichtung versehenen Wandteile nach dem Anbringen der Verbindungsmittel nacharbeitsfrei verbunden. Dies ermöglicht eine kostengünstige Herstellung ohne aufwendige Nacharbeit.

Gemäß einer vorteilhaften Ausbildung der Erfindung enthalten die Verbindungsmittel Hilfsfügeteile, die vorzugsweise mit Halb-Hohl-Nieten oder mit Vollnieten gebildet sind. Dadurch lassen sich Verbindungen mit hohen statischen und dynamischen Festigkeitswerten vollautomatisch, beispielsweise im Stanznietverfahren, herstellen.

Beim Stanznieten mit Vollnieten weisen die Hilfsfügeteile zweckmäßigerweise vor und nach dem Verbinden der Wandteile eine im wesentlichen unveränderte äußere Formgestalt auf. Dadurch findet keine Umformung des Nietes statt, so daß sich Verbindungsstrukturen mit klar definierten Geometrieverhältnissen schaffen lassen.

Dabei ist es besonders vorteilhaft, wenn die Hilfsfügeteile mit über ihren Umfang angeordneten Erhöhungen und/oder Vertiefungen, vorzugsweise mit ringförmigen Nuten ausgebildet sind. Dadurch kann bei der Kalt-Verformung mittels stempel- und matritzen-seitiger Fügewerkzeuge durch plastisches Kalt-Werkstoff-Fließen von Teilwerkstoffbereichen der zu verbindenden Wandteile ein kraft- und formschlüssiger Verbund der Wandteile erreicht werden.

Zweckmäßigerweise bilden die Hilfsfügeteile mit zumindest einem der zu verbindenden Wandteile einen Schließkopf aus. Dadurch kann für den stempelseitigen Wandteil auch ein plastisch nicht umformbares Material verwendet werden und es lassen sich Verbindungsbereiche mit einer hohen statischen und dynamischen Beanspruchbarkeit schaffen.

Gemäß einer weiteren alternativen Ausgestaltung der Erfindung sind die Verbindungsstrukturen ausschließlich mit den sich gegenüberliegenden Wandteilen ausgebildet. Dadurch können Zusatzwerkstoffe, wie Lote, Schweißdrähte oder Kleber, sowie die jeweils erforderlichen Dosier- bzw. Zuführeinrichtungen entfallen und es sind auch keine Hilfsfügeteile, wie Niete, Schrauben oder dgl. und folglich auch keine Vereinzelungs- und/oder Zuführeinrichtungen hierfür erforderlich. Dadurch lassen sich besonders günstige, vollautomatisierbar herstellbare Verbindungen schaffen.

Weitere vorteilhafte Ausgestaltungen, Merkmale, Vorteile, Einzelheiten und Gesichtspunkte der Erfindung sind aucn ihren Anpassungen an die erfindungsgemäßen Ausführungen aus den Ansprüchen und aus dem nachfolgenden, anhand der Zeichnungen abgehandelten Beschreibungsteil zu entnehmen.

Ein Ausführungsbeispiel und Varianten der Erfindung werden nachfolgend anhand der Figuren erläutert.

Es zeigen:
- Fig. 1: ein Schrägbild eines Gerüstausschnittes mit zwei Stielen, einem Horizontalriegel und zwei nebeneinander liegenden Laufplanken bzw. Gerüstböden;
- Fig. 2: ein Schrägbild eines Gerüstbodenabschnitts im Bereich eines der stirnseitigen Enden des Gerüstbodens gemäß Fig. 1;
- Fig. 3: ein Schrägbild des Querversteifungsprofils mit den an ihm seitlich befestigten Einhängehaken;
- Fig. 4: eine Teildraufsicht des Querversteifungsprofils im Bereich eines an ihm seitlich angebrachten Einhängehakens;
- Fig. 5: eine Seitenansicht mit Teilschnitt des Querversteifungsprofils mit Einhängehaken;
- Fig. 6: eine Teiloberansicht des Querversteifungsprofils mit Einhängehaken;
- Fig. 7: eine Teil-Draufsicht auf das stirnseitige Ende des Gerüstbodens ohne Darstellung der Querversteifungsprofile;
- Fig. 8: ein Teil-Schrägschnittbild im Bereich eines der stirnseitigen Enden des Gerüstbodens zur Verdeutlichung der Montage- und Anlageverhältnisse;
- Fig. 9: eine Teil-Unteransicht des Gerüstbodens im Bereich einer seiner stirnseitigen Ecken;
- Fig. 10: einen Teil-Längsschnitt parallel zur Längsachse des Gerüstbodens im Bereich eines seiner Stirnenden;
- Fig. 11: eine Teil-Oberansicht des Gerüstbodens im Bereich einer seiner Stirnenden.

Die Fig. 12 bis 21 zeigen in schematischer Darstellung stark vergrößerte Teilschnitte jeweils zweier aneinander liegender Blech-Wand-Teile im Verbindungsbereich mit Detaildarstellung der Verbindungsstruktur in verschiedenen Ausführungsvarianten:

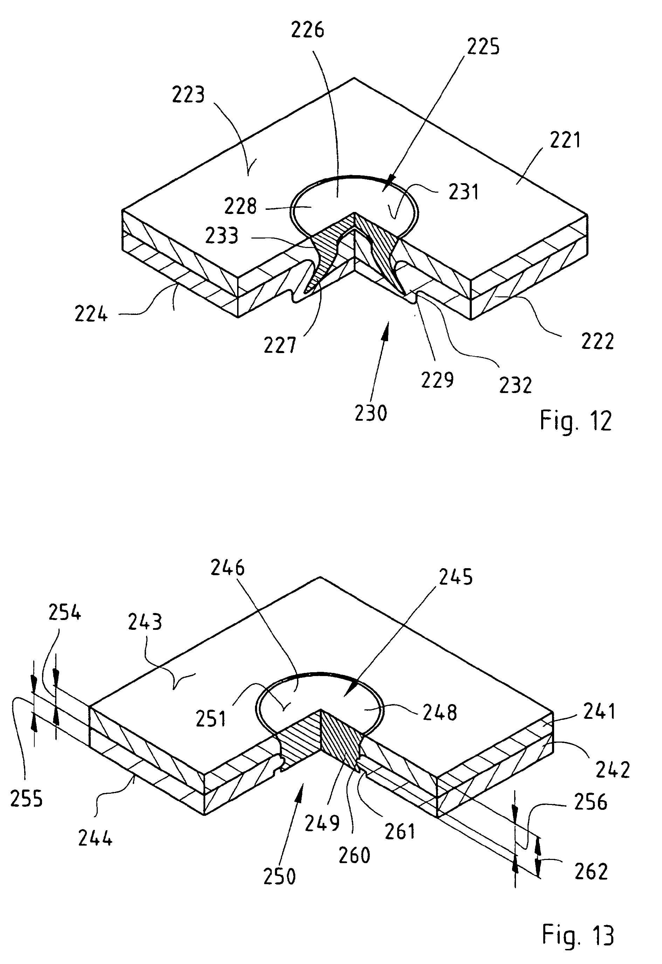

- Fig. 12: zeigt ein Teil-Schrägbild einer ersten Ausführungsvariante einer mittels Stanznietverfahren gebildeten Verbindungsstruktur unter Verwendung eines Halbhohl-Niets;
- Fig. 13: zeigt ein Teil-Schrägbild einer zweiten Ausführungsvariante einer mittels Stanznietverfahren gebildeten Verbindungsstruktur unter Verwendung eines Voll-Niets;

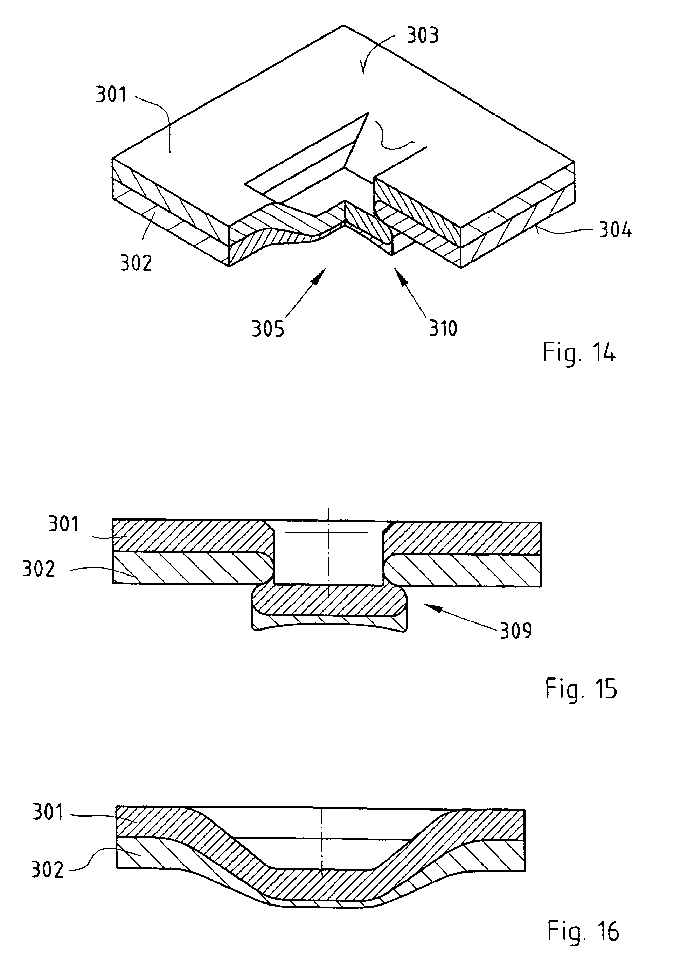

- Fig. 14: zeigt ein Teil-Schrägbild einer ersten Ausführungsvariante einer mittels DurchsetzFügeverfahren gebildeten balken- bzw. rechteckförmigen Verbindungsstruktur, bei der sowohl der obere, stempelseitige Wandteil als auch der untere matritzenseitige Wandteil eingeschnitten ist;
- Fig. 15: zeigt einen Querschnitt durch die Verbindungsstruktur gemäß Fig. 14;
- Fig. 16: zeigt einen Längsschnitt durch die Verbindungsstruktur gemäß Fig. 14;

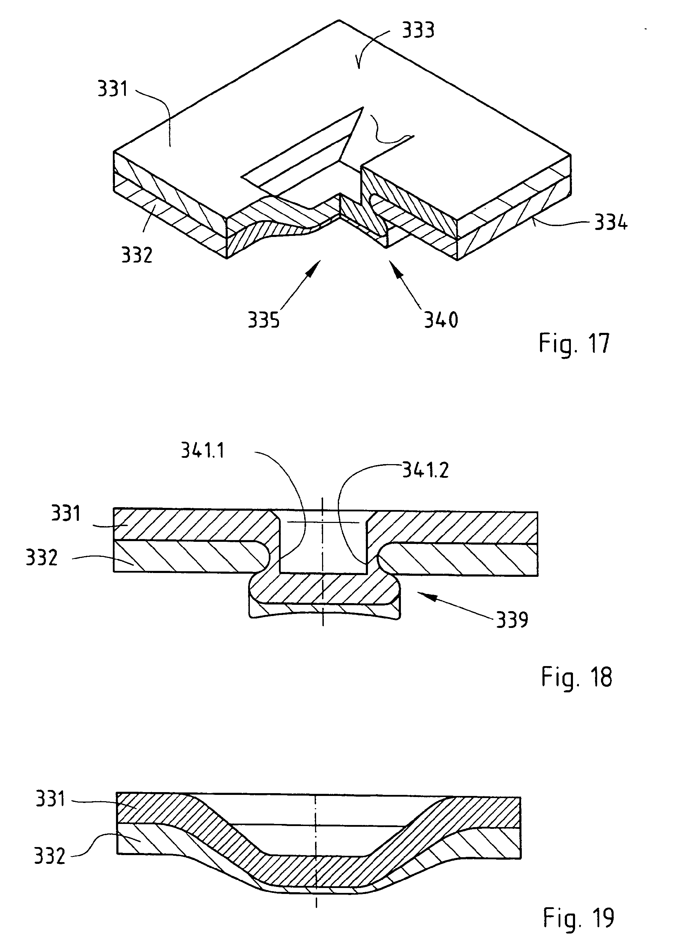

- Fig. 17: zeigt ein Teil-Schrägbild einer zweiten Ausführungsvariante eines mittels Durchsetz-Fügeverfahren gebildeten, balken- bzw. rechteckförmigen Verbindungsstruktur, wobei nur der untere, matritzenseitige Wandteil durch das Fügewerkzeug eingeschnitten ist, während der obere, stempelseitige Wandteil nicht eingeschnitten ist;
- Fig. 18: zeigt einen Querschnitt durch die Verbindungsstruktur gemäß Fig. 17;
- Fig. 19: zeigt einen Längsschnitt durch die Verbindungsstruktur gemäß Fig. 17;

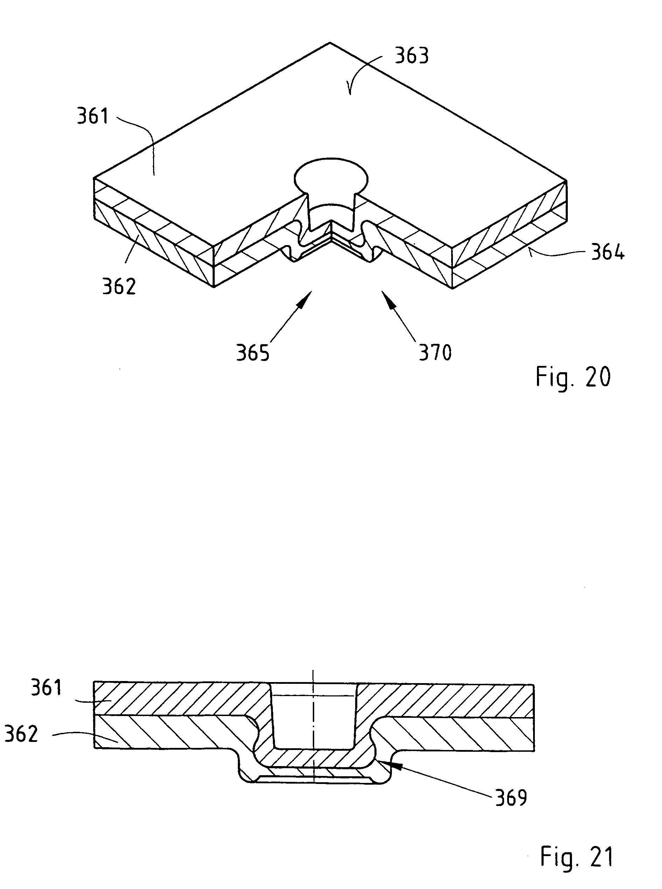

- Fig. 20: zeigt ein Teil-Schrägbild einer dritten Ausführungsvariante einer mittels Durchsetz-Fügeverfahren gebildeten, runden bzw. kreisförmigen Verbindungsstruktur, wobei sowohl der obere, stempelseitige Wandteil als auch der untere, matritzenseitige Wandteil nicht eingeschnitten sind;
- Fig. 21: einen Querschnitt durch die Verbindungsstruktur gemäß Fig. 20.

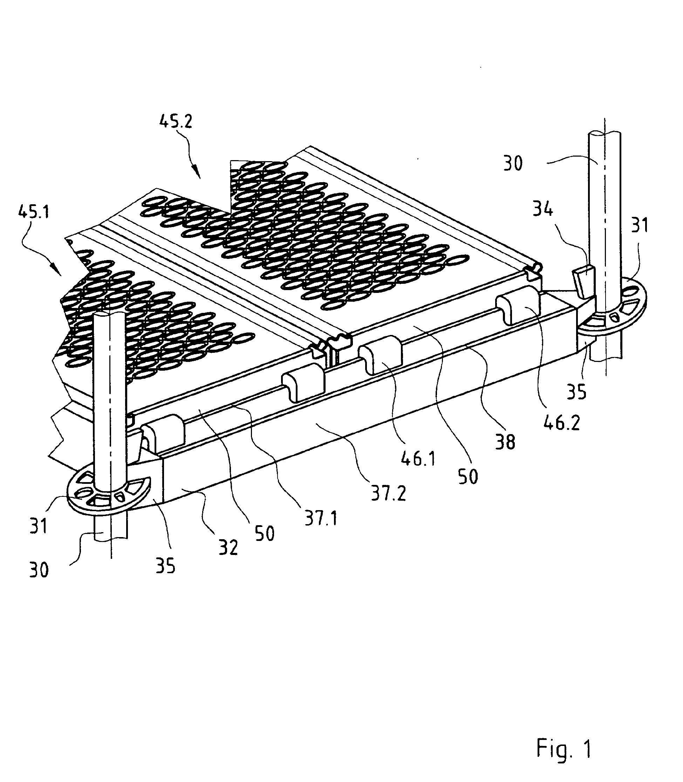

Fig. 1 zeigt einen kleinen Ausschnitt eines Gerüstes. Dabei sind an den Stielen 30 in einem dem Vertikalrastermaß des Gerüstsystems entsprechenden Abstand voneinander an sich bekannte Lochscheiben 31 angebracht. Zwischen den Stielen 30 ist an den Lochscheiben 31 ein Horizontalriegel 32 mit Hilfe von Keilköpfen 35 und diesen sowie die Lochscheibe 31 durchdringenden Keilen 34 befestigt. Der Horizontalriegel 32 ist als ein nach oben offenes U-Profil mit den beiden seitlichen Vertikalschenkeln 37.1 und 37.2 ausgebildet. Deren obere Enden sind als Auflageränder 38 für die Einhängehaken 46.1 bzw. 46.2 gestaltet. Die Keilköpfe 35 sind in bekannter Weise mit Horizontalschlitzen gestaltet und auf die Lochscheiben 31 aufgesteckt und daran mit den Keilen 34 gesichert.

In dieser oder ähnlicher Art sind viele Gerüstetagen in einem Gerüst realisert. Anhand der Darstellung in Fig. 1 ist veranschaulicht, wie die Laufplanken mit ihren jeweiligen Gestaltungen als ein Teil des gesamten Gerüstes angeordnet sind. Anstelle eines Gerüstes mit Stielen und modulartigen Knotenanschlüssen können auch sogenannte Rahmengerüste vorgesehen sein.

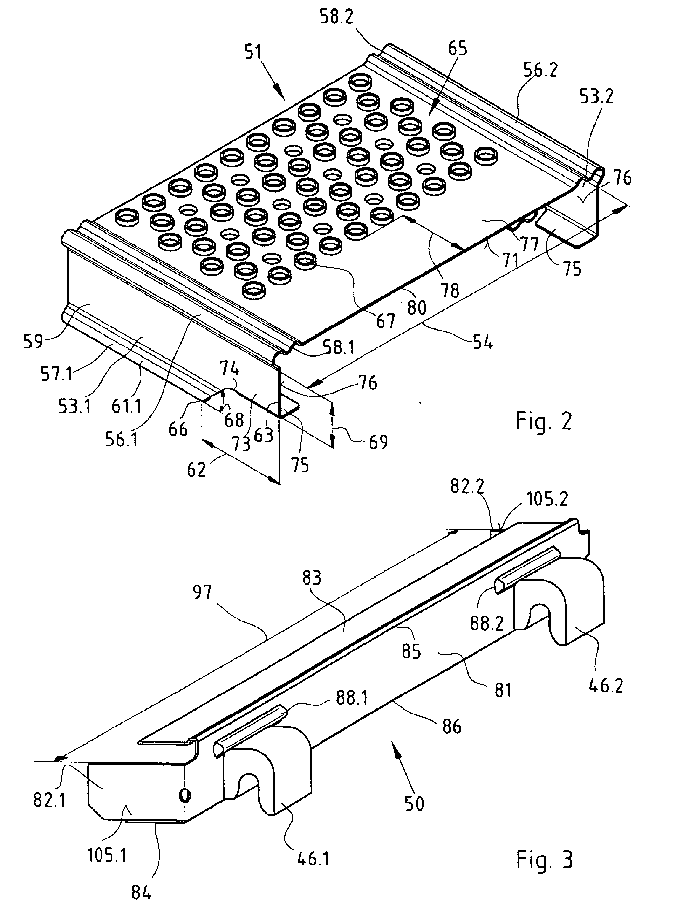

Aus den Fig. 2 und 3 geht die Gestaltung und relative Anordnung der wesentlichen, den Gerüstboden bzw. die Laufplanke 45 bildenden Teile hervor. Fig. 2 zeigt den hier einstückig im wesentlichen im Roll-Biege-Verfahren hergestellten Bodenprofilteil 51 aus Stahl-Blech. Dieser ist lateralseitig mit den profilartig gestalteten Längsholmen 53.1 und 53.2 und dem Laufflächenblech 65 ausgebildet. Das Laufflächenblech 65 weist eine Vielzahl von hier kreisförmigen Öffnungen 67 auf, die zum Teil mit nach oben aufgewulsteten Lochrändern und zum Teil mit nach unten aufgewulsteten Lochrändern gestaltet sind. Auf diese Weise wird nicht nur eine Strukturverstärkung bzw. Versteifung des horizontalen Laufflächenblechs 65 und damit der gesamten Laufplanke 45 erzielt, sondern eine rutschsichere Oberfläche einerseits sowie eine Möglichkeit zum Ablauf von fluiden Substanzen andererseits geschaffen. Die Öffnungen 67 sind gleichmäßig über das gesamte Laufflächenblech 65 angeordnet, wobei im Bereich der stirnseitigen Enden 63 des Bodenprofilteils 51 der horizontale, nicht mit Öffnungen versehene Laufflächenteil 77 vorgesehen ist, so daß die Öffnungen 67 vom stirnseitigen Ende 63 einen Abstand 78 aufweisen.

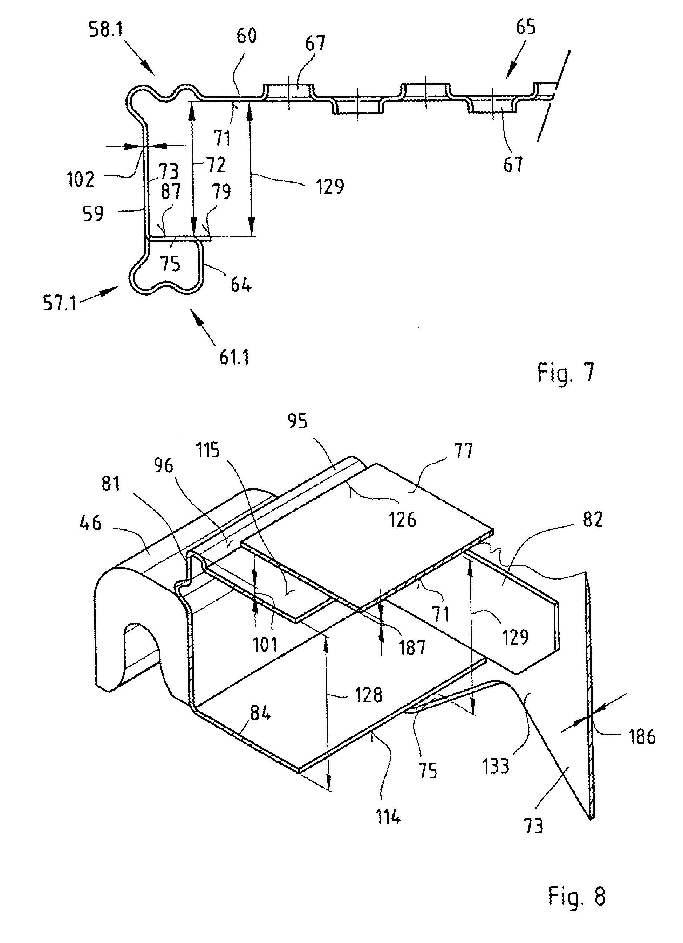

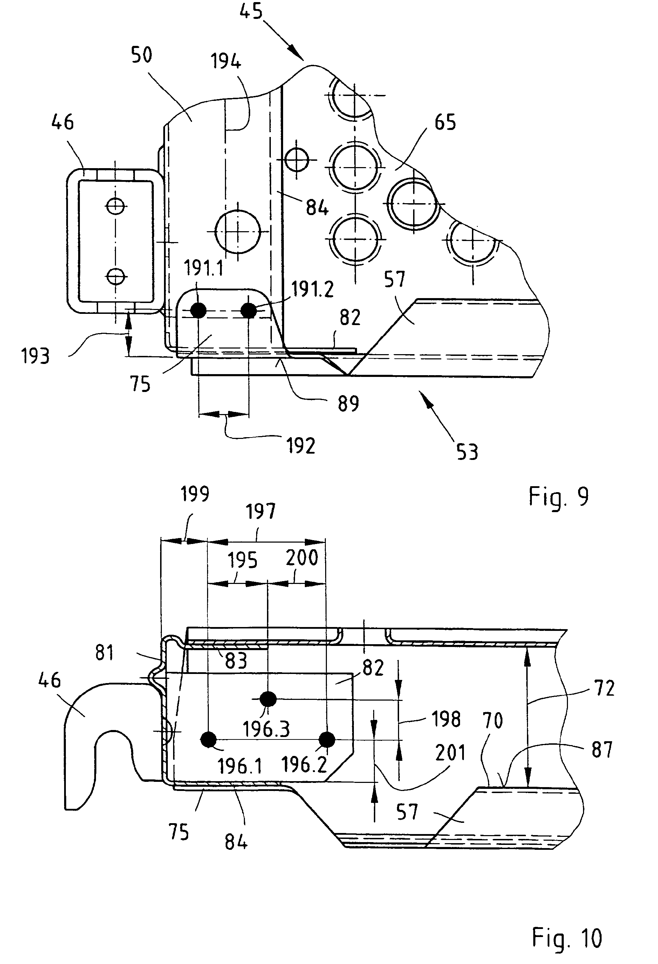

Die Längsholme 53.1 und 53.2 sind mit den vertikalen Wandteilen 59 und den sich nach oben sowie nach unten anschließenden, mehrfach gebogenen bzw. abgewinkelten, auch Stapelrippen 58.1, 58.2, 61.1, 61.2 bildenden, versteifenden, oberen Holmprofilen 56.1 und 56.2 sowie den unteren Holmprofilen 57.1 und 57.2 gestaltet und weisen die einheitliche Wanddicke 102 auf. Die oberen Holmprofile 56.1 bzw. 56.2 sind mit den im Stirnquerschnitt wellenförmig gestalteten Stapelrippen 58.1 bzw. 58.2 gebildet. Diese gehen jeweils in die horizontale Lauffläche 60 einerseits und in die vertikalen Wandteile 59 der Längsholme 53 über. An dem der Lauffläche 60 abgewandten unteren Ende der Längsholme 53 sind die unteren Holmprofile 57.1 bzw. 57.2 als Längsversteifungsprofile ausgebildet. Diese weisen die unteren Stapelrippen 61.1 bzw. 61.2 und den sich nach innen anschliessenden Vertikal-Längs-Schenkel 64 auf, der im Abstand 72 von der Unterseite 71 des Laufflächenblechs 65 bzw. des Laufflächenteils 77 in den Horizontal-Längs-Schenkel 70 abgewinkelt ist (Fig. 7 und 10).

Während die oberen Holmprofile 56 mit ihren Stapelrippen 58 jweils bis an das stirnseitige Ende des Bodenprofilteils 51 reichen, enden die unteren Holmprofile 57 mit ihren Stapelrippen 61 im Abstand 62 vor dem stirnseitigen Ende 63 der Längsholme 53 bzw. des Bodenprofilteils 51.

Ausgehend von dem unteren Ende 66 des unteren Holmprofiles 57 ist der Längsholm 53 schräg nach oben in Richtung auf das stirnseitige Ende 63 des Bodenprofilteiles 51 bzw. des Längsholms 53 abgeschrägt gestaltet, und zwar in einem Winkel 68 von etwa 45°. Daran schließt sich der vertikale Wandteil 73 an, der durch die parallel zur Lauffläche 60 und in Längsrichtung ausgebildete Unterkante 74 begrenzt ist. Diese weist einen Abstand 69 unter der Unterseite 71 des Laufflächenblechs 65 bzw. des Laufflächenteils 77 auf.

An der Unterkante 74 des vertikalen Wandteiles 73 ist im Bereich des stirnseitigen Endes 63 die um 90° nach innen abgewinkelte, als Laschen-Schenkel-Teil ausgebildete, horizontale Verbindungslasche 75 vorgesehen.

Wie aus Fig. 2 und insbesondere aus Fig. 9 und 12 ersichtlich, ist die Verbindungslasche 75 trapezförmig gestaltet. Anstelle der hier dargestellten und nachfolgend beschriebenen Trapezform kann jedoch abhängig von den jeweiligen Montage-, Füge- und Festigkeitsverhältnissen eine andere äußere Gestaltung der Verbindungslasche 75 vorgesehen sein.

Die mit Trapez-Basiskante 171 bezeichnete Grundlinie des Trapezes ist mit der Unterkante 74 des vertikalen Wandteils 73 des Längsholmes 53 gebildet. Die Trapez-Basiskante 171 ist länger als die übrigen Trapezseiten und weist eine Länge bzw. Breite 176 auf, die hier etwa der Tiefe 113 des Unterschenkels 84 des Querversteifungsprofils 50 entspricht. Senkrecht auf die Trapez-Basiskante 171 ist die parallel zur Stirnkante 126 des Laufflächenteils 77 verlaufende stirnseitige Vorderkante 172 ausgebildet. Diese weist eine Länge 177 auf, die hier etwa dem 0,5-fachen der Tiefe 113 des Unterschenkels 84 entspricht. Der Übergang zwischen der stirnseitigen Vorderkante 172 und der sich an diese anschließenden, parallel zur Trapez-Basiskante 171 verlaufenden und nach innen weisenden schmalen Basiskante 173 ist abgerundet gestaltet. Ihre Länge 178 ist hier geringfügig größer als die Länge 177 der stirnseitigen Vorderkante 172. An die schmale Basiskante 173 schließt sich die unter dem Winkel 181 von hier etwa 135° schräg nach außen verlaufende Innenkante bzw. Trapez-Schrägkante 174 an. Diese weist eine Länge 179 auf.

Die horizontale Verbindungslasche 75 weist von dem Laufflchenblech 65 bzw. dem Laufflächenteil 77 einen Abstand 129 auf, der dem Abstand 72 des Horizontal-Längs-Schenkels 70 des unteren Holmprofiles 57 entspricht, so daß die innere Oberfläche 79 der Verbindungslasche 75 und die innere Oberfläche 87 des Horizontal-Längs-Schenkels 70 etwa in einer Ebene liegen.

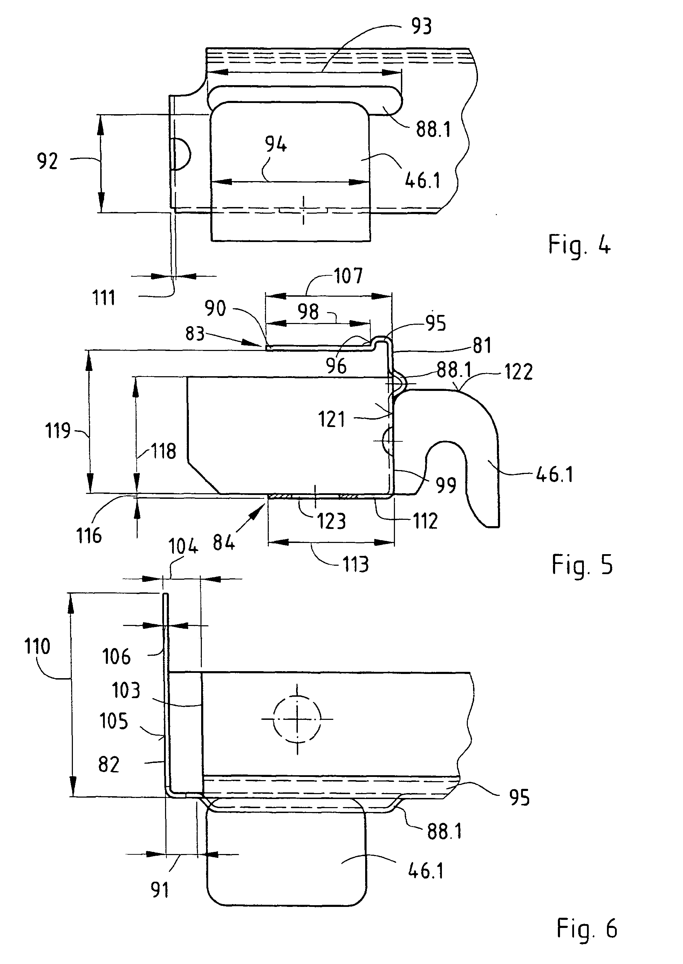

Fig. 3 zeigt eines der jeweils stirnseitig in das Bodenprofilteil 51 einsteckbaren Querversteifungsprofile 50, die als Stirnprofilteil bzw. Querverbindungskappe ausgebildet sind. Dieses ist mit der Vertikalaußenwand 81 und den jeweils durch Abkanten gebildeten Seitenschenkeln 82.1 und 82.2 sowie dem Oberschenkel 83 und dem Unterschenkel 84 gestaltet und weist folgende, insbesondere auch aus den Fig. 4 bis 6 hervorgehende Anschlußbedingungen auf, die auch zu der Einhänge-Haken-Gestaltung passend ausgebildet sind.

In der Vertikalaußenwand 81 des Querversteifungsprofils 50 sind zwei nach außen gewölbte Sicken 88.1 und 88.2 ausgebildet, die jeweils im Abstand 91 von den Seitenschenkeln 82.1 bzw. 82.2 sowie im Abstand 92 vom Unterschenkel 84 horizontal verlaufend angeordnet sind. Die Breite 93 der Sicken 88 ist etwas größer als die Breite 94 der Einhängehaken 46.

Der Oberschenkel 83 des Querversteifungsprofils 50 ist mit dem parallel zum Unterschenkel 84 verlaufenden Einschubteil 90 und im Übergangsbereich zur Vertikalaußenwand 81 hin mit der nach oben weisenden Anschlagund Ausgleichsrippe 95 gebildet. Diese weist eine vertikale, parallel zur Vertikalaußenwand 81 verlaufende Anschlagfläche 96 auf. Die Eckübergänge zwischen der Vertikalaußenwand 81 und der vertikalen Anschlagfläche 96 sind abgerundet, während der Eckübergang zum horizontalen Einschubteil 90 des horizontalen Oberschenkels 83 abgekantet gestaltet ist. Das Einschubteil 90 weist die Tiefe 98 auf. Die jeweilige lateralseitige Außenkante 103 des Oberschenkels 83 weist einen Abstand 104 von der Außenfläche 105 des Seitenschenkels 82 auf, der größer ist als die Wandstärke 106 des Seitenschenkels 82 bzw. der übrigen, das Querversteifungsprofil 50 bildenden Teile.

Der Unterschenkel 84 des Querversteifungsprofils 50 verläuft überwiegend parallel zum Einschubteil 90 des Ober-schenkels 83 und ist senkrecht zur Vertikalaußenwand 81 ausgebildet. Der Abstand 111 der seitlichen Stirnkante 112 des Unterschenkels 84 von der Außenfläche 105 des jeweiligen Seitenschenkels 82.1 bzw. 82.2 entspricht der Wandstärke 106 des Querversteifungsprofils 50.

Der Oberschenkel 83 weist eine Tiefe 107 auf und der Unterschenkel 84 weist eine Tiefe 113 auf, die hier gleich groß sind.

Der Seitenschenkel 82.1 bzw. 82.2 ist normal zur Vertikalaußenwand 81 sowie normal zu dem horizontalen Unterschenkel 84 ausgebildet. Seine Tiefe 110 ist um etwa das 1,5- bis 1,8-fache größer als die Tiefe 107 des Unterschenkels 84 bzw. die Tiefe 113 des Oberschenkels 83. Der Abstand 116 seiner unterseitigen Stirnkante 117 von der nach außen weisenden Oberfläche 114 des Unterschenkels 84 entspricht etwa der Wandstärke 106 des Querversteifungsprofils 50. Seine Breite 118 ist kleiner als der lichte Abstand 119 zwischen dem Unterschenkel 84 und dem horizontalen Einschubteil 90 des Oberschenkels 83.

Im Einschubteil 90 des Unterschenkels 84 sind jeweils seitlich angeordnete kreisförmige Öffnungen 123 vorgesehen. Diese dienen zur Aufnahme von Einhängemitteln mittels derer die Querverbindungskappe 50 bzw. die gesamte Laufplanke 45 beim Durchlaufen des für die Oberflächenbehandlung der Stahlbleche notwendigen Verzinkungsbades aufgehängt werden kann.

Als Einhängehilfsmittel sind beiderends der Laufplanke 45 die Einhängehaken 46.1 und 46.2 vorgesehen. Diese sind beispielsweise unter Verwendung einer geeigneten Hilfsvorrichtung an der Vertikalaußenwand 81 des Querversteifungsprofils 50 angeschweißt. Die genaue Höhenposition der Einhängehaken 46.1 bzw. 46.2 wird dabei in der Weise festgelegt, daß diese jeweils mit ihrer rückseitigen Anlagefläche 121 unterhalb der Sicke 88.1 bzw. 88.2 an der Vertikalaußenwand 81 angelegt werden und soweit nach oben verschoben werden, bis sie mit ihrer oberen Begrenzungsfläche 124 an der Sicke 88.1 bzw. 88.2 anliegen.

Anstelle der in den Figuren gezeigten Einhängehaken 46, 46.1, 46.2, die ein leichtes und sicheres Einhängen, inbesondere in die, mit einem nach oben offenen U-Profil gestalteten Horizontaltragriegel 32 ermöglichen, können in Verbindung mit anderen Auflage- und/oder Einhängerandbedingungen auch anders gestaltete Einhängehilfsmittel vorgesehen sein.

Beispielsweise können zur Auflage auf Rundrohren passend gestaltete Einhängehaken vorgesehen sein, die ebenfalls an der Vertikalwand 81 des Querversteifungsprofils 50 angeschweißt sind. Zur Abhubsicherung können horizontal unter die Rundrohre schwenkbare Laschen vorgesehen sein. Diese können mittels geeigneter Verbindungsmittel vorzugswewise an dem Unterschenkel 84 des Querversteifungsprofils 50 angelenkt sein. Als Verbindungsmittel können beispielsweise durch Löcher des Unterschenkels 84 steckbare Nieten vorgesehen sein.

Alternativ oder kumulativ können auch Einhängehilfsmittel vorgesehen sein, welche ein Einhängen der Laufplanken in vertikal aufragende Stifte ermöglichen, die beispielsweise an Querriegeln oder Konsolen befestigt sind. Hierzu können die Querversteifungsprofile mit einer ausreichend über das stirnseitige Ende 63 des Laufflächenblechs 65 hinausragenden U-förmigen oder kastenprofilförmigen Profilgestaltung gebildet sein. Die Ober- und Unterschenkel dieser Profilgestaltung können beispielsweise mit fluchtenden Öffnungen versehen sein, deren Lochränder vorzugsweise nach innen ragen und abgerundet sind. Es können jedoch auch andere, geeignet erscheinende Lochrand-Konfigurationen vorgesehen sein, die ein sicheres und leichtes Aufstecken der Laufplanken auf die Vertikalstifte und eine leichte Demontage ermöglichen.

Bei der Montage wird das Querversteifungsprofil 50 in die Bodenprofilstruktur der Laufplanke 45 eingeschoben, bis die Anschlagfläche 96 an der Stirnkante 126 des Laufflächenteils 77 des Laufflächenblechs 65 der Gerüstbodenstruktur anschlägt (Fig. 8). Dabei untergreift der horizontale Einschubteil 90 des Oberschenkels 83 des Querversteifungsprofils 50 den Laufflächenteil 77 und der Unterschenkel 84 liegt auf der inneren Oberfläche 79 der Verbindungslasche 75 auf. Der Abstand 128 zwischen der nach außen weisenden Oberfläche 115 des horizontalen Einschubteils 90 des Oberschenkels 83 und der nach außen weisenden Oberfläche 114 des Unterschenkels 84 ist dabei gleich groß oder geringfügig kleiner als der Abstand 129 zwischen der nach innen weisenden Unterseite 71 des Laufflächenteils 77 des Laufflächenblechs 65 und der nach innen weisenden Oberfläche 79 der Verbindungslasche 75.

Die Seitenschenkel 82 liegen etwa über ihre gesamte Länge 110 an der glatten Innenwand 133 des vertikalen Wandteiles 73 des Längsholmes 53 an. Der Abstand 97 zwischen den Außenflächen 105.1 und 105.2 der beiden Seitenschenkel 82.1 und 82.2 ist dabei gleich groß oder geringfügig kleiner als der Abstand 54 zwischen den Innenflächen 76 der vertikalen Wandteile 73 der Längsholme 53.

Bedingt durch die vorgenannten Maßnahmen kann das Querversteifungsprofil 50 leicht in die Bodenprofilstruktur der Laufplanke eingesteckt werden, so daß ein steifer und verwindungsstabiler Rahmen ausgebildet wird.

In weiteren, nicht in den Figuren gezeigten Ausführungsvarianten können der Oberschenkel und/oder der Unterschenkel und/oder die Seitenschenkel des Querversteifungsprofils derart angeordnet sein, daß ihre Innenflächen auf den Außenflächen der übrigen, die Gerüstbodenprofilstruktur der Laufplanke 45 ausbildenden Wandteile auf- bzw. anliegen.

Die Befestigung des Querversteifungsprofils 50 an der Bodenprofilstruktur der Laufplanke 45 erfolgt an bestimmten Fügestellen mittels geeigneter Verbindungsstrukturen, die mittels eine lange Zeit sichere Verbindung ermöglichender, lokal einwirkender Fügeverfahren hergestellt werden.

Die genaue Lage und Anordnung der Fügestellen bzw. der die Verbindungsstrukturen enthaltenden Verbindungsbereiche ergibt sich am besten aus den Fig. 9 bis 11. In Fig. 9 ist die Verbindung des Unterschenkels 84 des Querversteifungsprofils 50 mit der Verbindungslasche 75 des Längsholmes 53 im Bereich einer der stirnseitigen Ecken der Laufplanke 45 gezeigt. Dabei sind die beiden Verbindungsstrukturen 191.1 und 191.2 vorgesehen, die in Längsrichtung hintereinander liegend und in dem Abstand 192 zueinander angeordnet sind. Die Verbindungsstrukturen 191.1 und 191.2 weisen von der Außenfläche 89 des vertikalen Wandteils 73 des Längsholmes 53 einen Abstand 193 auf, der etwa dem Abstand 192 entspricht. Die Verbindungsstrukturen 191.1 und 191.2 sind symmetrisch zur Querachse 194 des Unterschenkels 84 bzw. des Querversteifungsprofils 50 angeordnet.

In Fig. 10 ist die Lage und Anordnung der Fügestellen bzw. Verbindungsstrukturen 196.1, 196.2, 196.3 zur Verbindung des Seitenschenkels 82 des Querversteifungsprofiles 50 mit dem Längsholm 53 gezeigt. Diese sind dreieckförmig zueinander angeordnet. Dabei sind die beiden unteren Verbindungsstrukturen 196.1, 196.2 etwa parallel zur Längsachse der Laufplanke 45 ausgerichtet und weisen einen Abstand 197 voneinander auf. Dieser entspricht etwa der Tiefe 113 des Unterschenkels 84 des Querversteifungsprofils 50. Die Verbindungsstruktur 196.3 ist oberhalb der beiden Verbindungsstrukturen 196.1 und 196.2 in der Horizontal-Mitte zwischen diesen angeordnet, so daß die Verbindungsstruktur 196.3 zu der Verbindungsstruktur 196.1 und zu der Verbindungsstruktur 196.2 gleich große horizontale Abstände 195 bzw. 200 aufweist. Die Verbindungsstruktur 196.3 weist zu den beiden unteren Verbindungsstrukturen 196.1 und 196.2 einen vertikalen Abstand 198 auf. Dadurch bilden die drei Verbindungsstrukturen 196.1, 196.2, 196.3 ein gleichseitiges Dreieck aus.

Die stirnseitig angeordnete Verbindungsstruktur 196.1 weist von dem stirnseitigen Ende des Seitenschenkels 82 bzw. von der Vertikal-Außenwand 81 des Querversteifungsprofiles 50 einen Abstand 199 auf, der dem Abstand 198 der Verbindungsstruktur 196.3 von den beiden unteren Verbindungsstrukturen 196.1 und 196.2 entspricht. Letztere weisen von der unteren Stirnkante 117 des Seitenschenkels 82 bzw. von dem Unterschenkel 84 des Querversteifungsprofiles 50 einen Abstand 201 auf, der dem Abstand 199 der stirnseitigen Verbindungsstruktur 196.1 von dem stirnseitigen Ende des Seitenschenkels 82 bzw. von der Vertikal-Außenwand 81 des Querversteifungsprofiles 50 etwa entspricht.

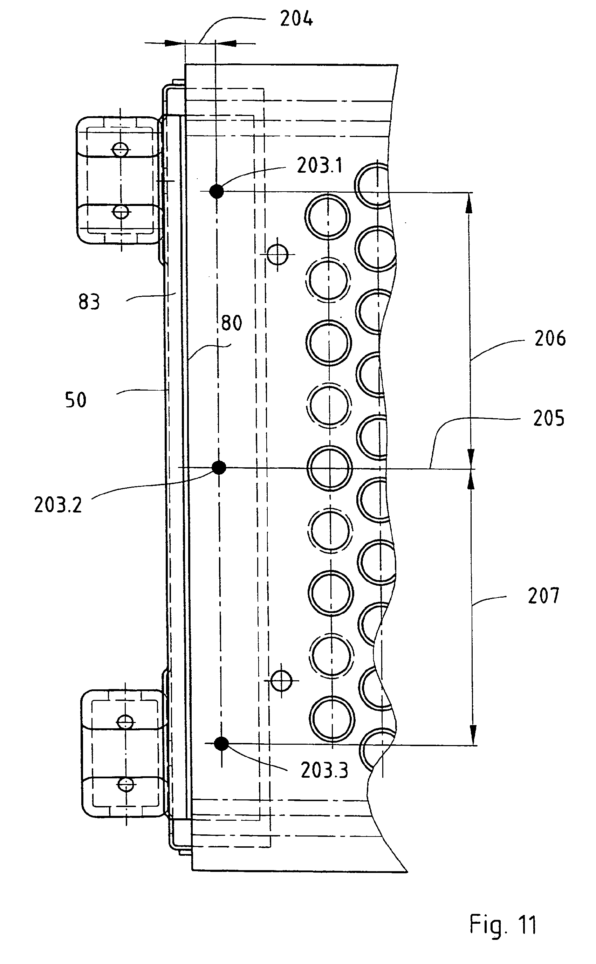

In Fig. 11 ist die Verbindung des Oberschenkels 83 des Querversteifungsprofiles 50 mit dem Laufflächenteil 77 des Laufflächenbleches 65 gezeigt. Hierfür sind drei parallel zur Stirnkante 126 des Laufflächenteiles 77 und in einer Reihe angeordnete Verbindungsstrukturen 203.1, 203.2, 203.3 angebracht. Diese weisen von der Stirnkante 117 des Laufflächenblechs 65 einen Abstand 204 auf, der etwa dem 6- bis 9-fachen der Wandstärke 187 des Laufflächenteiles 77 bzw. des Laufflächenbleches 65 im Verbindungsbereich entspricht. Die Fügestellen bzw. Verbindungsstrukturen 203.1, 203.2, 203.3 sind symmetrisch zur Mitten-Längsachse 205 der Laufplanke 45 angeordnet, und weisen zueinander die gleich großen Abstände 206 bzw. 207 auf.

Die Anzahl, Lage und Anordnung der vorstehend bezeichneten Fügestellen bzw. Verbindungsstrukturen 191.1, 191.2, 196.1, 196.2, 196.3, 203.1, 203.2, 203.3 ist auch unter Berücksichtigung der sich aus den seitherigen Herstellungsgegebenheiten ergebenden Randbedingungen, insbesondere unter Beibehalt einer im wesentlichen gleichbleibenden äußeren Gestalt des Querversteifungsprofils sowie unter Berücksichtigung des seitherigen, auf die Gerüst-Rastermaße abgestimmten Baukastensystems und insbesondere der in den für die Steifigkeit und Rahmenausbildung der gesamten Laufplanke wichtigen Stirn- und Eckbereichen auftretenden statischen und dynamischen Beanspruchungen und der dort auftretenden Spannungen und Werkstoffbeanspruchungen sowie der Schaffung günstiger Möglichkeiten einer vollautomatischen Fertigung auch im Hinblick auf eine gute Fügewerkzeug-Zugänglichkeit der zu verbindenden Wandteile gewählt.

Die Verbindung der gegenüberliegenden Wandteile erfolgt vorzugsweise bei zumindest teilplastischem Kalt-Werkstoff-Fließen durch Umformverfahren, wie Durchsetzfügen bzw. Clinchen und/oder Stanznieten. Dabei werden die zu verbindenden Wandteile ohne Vorlochen von zwei Seiten unter Verwendung von geeigneten Fügewerkzeugen, insbesondere Stempeln und Matritzen, sowie ggf. Niederhalter verbunden.

In den Fig. 12 und 13 sind die unter Verwendung von Halbhohlnieten 226 bzw. Vollnieten 246 mit den sich jeweils gegenüberliegenden Wandteilen 221 und 222 bzw. 241 und 242 ausgebildeten Verbindungsstrukturen 225 bzw. 245 gezeigt. Beim Fügen mit Halbhohlniet gemäß Fig. 12 werden die Wandteile 221 und 222 zunächst mittels einer nicht dargestellten Matritze und einem nicht dargestellten Niederhalter fixiert. In einem weiteren Vorschub wird der Halbhohlniet 226 dem Verbindungsbereich zugeführt. In einem ununterbrochenen Fügevorgang durchtrennt der Halbhohlniet 226 den oberen Wandteil 221 und verformt unter gleichzeitiger eigener Verspreizung den unteren Wandteil 222 plastisch zu dem Schließkopf 229. Dessen Form wird im wesentlichen durch die Form des Matritzen-Werkzeuges bestimmt. Bei dem in Fig. 12 gezeigten Ausführungsbeispiel besteht auch der obere Wandteil 221 aus einem plastisch verformbaren Werkstoff, so daß in diesem Fall eine durch plastisches Kalt-Werkstoff-Fließen der zu verbindenden Wandteile 221, 222 sowie des Halbhohlnietes 226 gebildete Verbindungsstruktur 225 geschaffen ist. Der Stempelseitige Wandteil kann jedoch auch aus einem nicht plastisch formbaren Werkstoff bestehen.

Der als Setzkopf 228 wirkende Kopf des Halbhohlnietes 226 wird bei der Herstellung der Verbindung so weit in den oberen Wandteil 221 eingeführt, bis die Setzkopf-Oberfläche 231 in einer Ebene mit der äußeren freien Oberfläche 223 des Wandteiles 221 liegt. Dadurch wird erreicht, daß die Verbindungsstruktur 225 nicht über die außen liegende freie Oberfläche 223 der miteinander verbundenen Wandteile 221, 222 hervorsteht. Im umgeformten Zustand hintergreifen sowohl der aufgespreizte Nietkragen 227 des Halbhohlnietes 226 als auch die diesen umschließenden plastisch verformten TeilBereiche 232 des unteren Wandteiles 222 den Öffnungsrand 233 des oberen Wandteiles 221. Dabei bildet die druckknopfartig gestaltete Verbindungsstruktur 225 einen Schließkopf 229 aus.

Beim Stanznieten mit Vollniet kann beispielsweise die in Fig. 13 gezeigte Verkbindungsstruktur 245 ausgebildet sein. Dabei werden die zu verbindenden Blech-Wandteile 241, 242 ebenfalls zunächst zwischen einer unteren Matritze und einem oberen Niederhalter (in Fig. 13 nicht dargestellt) fixiert. Gleichzeitig wird der Vollniet 246 automatisch zugeführt und positioniert. Danach wird der Vollniet 246 durch einen ebenfalls nicht dargestellten Nietstempel stanzend durch die zu verbindenden Wandteile 241, 242 hindurchgedrückt. Im Gegensatz zu dem Stanznieten mit Halbhohlniet behält beim Stanznieten mit Vollniet der Niet vor und nach dem Verbinden der Wandteile eine im wesentlichen unveränderte äußere Formgestalt.

Der Vollniet 246 weist in dem auf die Wanddicken 254 und 255 der Wandteile 241 und 242 abgestimmten Abstand 256 von der Setzkopf-Oberfläche 251 seines Setzkopfes 248 die umlaufende Ringnut 260 auf. Eine zwischen den Wandteilen 241 und 242 form- und kraftschlüssige Verbindung wird beispielsweise dadurch erreicht, daß ein matritzenseitiges Fügewerkzeug mit einer erhabenen ringförmigen Gestalt verwendet wird (in Fig. 13 nicht gezeigt), wodurch beim Umformen ein plastisches Fließen von Teilwerkstoffbereichen des matritzenseitigen Wandteils 242 in die Ringnut 260 des Vollniets 246 induziert wird. Entsprechend der ringförmigen Gestalt des matritzenseitigen Fügewerkzeuges weist der untere Wandteil 242 nach dem Umformvorgang die untere Ringnut 261 auf, die sich direkt an den Vollniet 246 anschließt.

In vergleichbarer Weise wie beim Stanznieten mittels Halbhohlniet 226 (Fig. 12) ist der Vollniet 246 mit seinem den Setzkopf 248 ausbildenden Nietkopf so weit in dem stempelseitigen oberen Wandteil 241 eingeführt, bis die Setzkopf-Oberfläche 251 in einer Ebene mit der äußeren freien Oberfläche 243 des Wandteils 241 liegt. Ferner ist die Höhe 263 des Vollnietes 246 so gewählt, daß sie der Summe der Wanddicken 254 und 255 der Wandteile 241 und 242 entspricht oder geringfügig kleiner ist. Durch diese Maßnahmen wird erreicht, daß die Verbindungsstruktur 245 weder über die außen liegende freie Oberfläche 243 noch über die innen liegende freie Oberfläche 244 der miteinander verbundenen Wandteile 241, 242 hervorsteht.

In den Fig. 14 bis 21 sind weitere vorteilhafte Ausgestatlungen der Erfindung gezeigt, wobei die Verbindungsstrukturen 305, 335, 365 ausschließlich mit den zu verbindenden Wandteilen 301, 302; 331, 332; 361, 362 gebildet sind. Diese, ohne Zusatzwerkstoffe oder Hilfsfügeteile, hergestellte Verbindung wird mittels eines Umformvorganges mit oder ohne Schneidanteil unter Verwendung von geeignet gestalteten Fügewerkzeugen, beispielsweise mittels einer Matritze und einem Stempel erzeugt (in den Fig. 14 bis 21 nicht dargestellt).

In den Fig. 14 bis 16 ist eine mittels Durchsetzfügen hergestellte rechteckförmige Verbindungsstruktur 305 gezeigt. In diesem Ausführungsbeispiel sind sowohl der stempelseitige Wandteil 301 als auch der matritzenseitige Wandteil 302 durch den nicht dargestellten Fügestempel in dem in Fig. 15 gezeigten Querschnitt eingeschnitten bzw. getrennt, während in dem in Fig. 16 dargestellten Längsschnitt der Verbindungsstruktur 305 die beiden Wandteile 301, 302 nur örtlich verformt, jedoch nicht getrennt sind. Bedingt durch das Zusammenwirken des Stempels und der Matritze wird durch ein teilweises Ausschneiden und durch plastisches Kalt-Fließ-Umformen der beiden Wandteile 301, 302 der in Fig. 15 dargestellte Schließkopf 309 geschaffen. Die sich dabei ausbildende Verbindungsstruktur 305 ist mit der den Schließkopf 309 enthaltenden Hintergreifstruktur 310 ausgebildet.

Zur Herstellung der Verbindungsstruktur 305 sind vergleichsweise geringe Fügekräfte erforderlich und es sind kostengünstige Werkzeugeinsätze möglich. Die balkenförmige bzw. rechteckförmige Strukturausbildung der Verbindungsstruktur 305 bedeutet die Ausbildung eines verdrehsicheren Fügeelementes. Die Verbindungsstruktur 305 mit dem unter den Rändern des stempelseitigen Wandteils 302 druckknopfartig ausgebildeten Schließkopf 309 steht folglich nicht über die außen liegende freie Oberfläche 303 des stempelseitigen Wandteiles 301 hervor.

In den Fig. 17 bis 19 ist ein weiteres Ausführungsbeispiel einer durchsetzgefügten Verbindung mit einer rechteckförmig bzw. balkenförmig ausgebildeten Verbindungsstruktur 335 gezeigt. Im Gegensatz zu dem in den Fig. 14 bis 16 gezeigten Ausführungsbeispiel ist jedoch hier der stempelseitige obere Wandteil 331 nicht durch den Stempel eingeschnitten bzw. getrennt. Im Zusammenwirken der Matritze mit dem Stempel bildet sich dabei der in Fig. 18 im Querschnitt gezeigte Schließkopf 339 aus. Dort sind deutlich die nicht abgescherten Ränder 341.1 und 341.2 des oberen stempelseitigen Wandteiles 331 ersichtlich.

Im Vergleich zu dem in den Fig. 14 bis 16 gezeigten Ausführungsbeispiel lassen sich mit einer derartigen Gestaltung der Verbindungsstruktur 335 statisch und dynamisch höher belastbare Verbindungen schaffen, die ebenfalls mit kostengünstigen Werkzeugsätzen möglich sind. Auch diese Verbindungsstruktur 335 weist die mit dem Schließkopf 339 gebildete Hintergreifstruktur 340 auf, wobei der Schließkopf 339 die Ränder des oberen stempelseitigen Wandteils 331 hintergreift. Auch die Verbindungsstruktur 335 steht nicht über die außen liegende freie Oberfläche 333 des oberen stempelseitigen Wandteils 331 hervor.

In den Fig. 20 und 21 ist ein drittes Ausführungsbeispiel einer durchsetzgefügten Verbindungssstruktur 365 gezeigt. Die Verbindungsstruktur 365 ist in diesem Fall rund bzw. kreisförmig ausgebildet, wobei im Gegensatz zu den zuvor beschriebenen beiden Ausführungsbeispielen weder der obere stempelseitige Wandteile 361 noch der untere matritzenseitige Wandteil 362 durch den nicht dargestellten Stempel geschnitten bzw. durchtrennt ist. Beide Wandteile 361 und 362 sind mit den durch plastisches Kalt-Werkstoff-Fließen erzeugten, den Schließkopf 369 aufweisenden Verbindungsstruktur 370 ausgebildet. Auch die Verbindungsstruktur 365 steht nicht über die außen liegende freie Oberfläche 363 des oberen, stempelseitigen Wandteiles 361 hervor.

Mittels derartigen Verbindungsstrukturen 365 lassen sich insbesondere Werkstoffe mit einem unterschiedlichen Umformvermögen problemlos fügen, so daß beispielsweise auch Sandwich-Bleche vorteilhaft fügbar sind.

Zur Übertragung von größeren Kräften auch in relativ kleinflächigen Wandteilbereichen ist es ohne weiteres möglich, mehrere der alternativen Verbindungsstrukturen 305, 335, 365 nahe beinander liegend anzubringen. Dies ist einerseits durch eine sequentielle Arbeitsweise möglich oder andererseits dadurch, daß mittels geeigneter Geometrien der Fügewerkzeuge mehrere Verbindungsstrukturen gleichzeitig geschaffen werden.

In jedem der vorbeschriebenen Ausführungsbeispiele zieht ein nicht dargestellter Stempel die zu verbindenden Wandteile 301, 302; 331, 332; 361, 362 in eine nicht dargestellte feste oder federnd nachgebende Matritze ein. Sobald der Werkstoff des jeweils untersten Wandteiles 302, 332, 362 auf der Matritze aufliegt, beginnt der Werkstoff seitlich plastisch zu fließen und mit ihm der oder die anderen Werkstoffe der übrigen Wandteile 302, 332, 362. Durch das Zusammenwirken von Stempel und Matritze werden folglich Druckkräfte auf die gegenüberliegenden Wandteile 301, 302; 331, 332; 361, 362 ausgeübt, welche ein plastisches Kalt-Werkstoff-Fließen zumindest einer der Wandteile 301, 302; 331, 332; 361, 362 bewirken, so daß die in den Fig. 14 bis 21 gezeigten Verbindungsstrukturen 305; 335; 365 geschaffen werden. In jedem Fall sind die Verbindungsstrukturen 305; 335; 365 vollautomatisiert ausbildbar und verbinden die gegenüberliegenden Wandteile 301, 302; 331, 332; 361, 362 form- und kraftschlüssig miteinander.

Weitere vorteilhafte Gesichtspunkte und Merkmale der Erfindung sind auch alleine oder in Kombination mit den nachstehenden Maßnahmen gegeben.

Beispielsweise kann alternativ vorgesehen sein, daß der Unterschenkel 84 des Querversteifungsprofils 50 die Verbindungslasche 75 untergreift.

Ferner kann vorgesehen sein, daß der Unterschenkel 84 und/oder der Oberschenkel 83 des Querversteifungsprofils 50 sich etwa über die ganze Breite der Laufplanke 45, 45.1, 45.2 erstrecken.

Zweckmäßigerweise ist das Querversteifungsprofil 50 mit einem C- bzw. U-förmigen Querschnittsprofil ausgebildet. Dieses kann jedoch auch abhängig von der gewünschten Belastbarkeit und der jeweiligen Abmaße mit einem querschnittlich geschlossenen Kastenprofil ausgebildet sein. Dabei kann vorgesehen sein, daß das Kastenprofil den Längsholmen 53, 53.1, 53.2 bzw. dem Laufflächenblech 65 vorgesetzt ist und/oder daß dieses zwischen die Längsholme 53, 53.1, 53.2 eingesteckt ist. Vorteilhafterweise erstreckt sich das Kastenprofil etwa über die ganze Breite der Laufplanke.

Zweckmäßigerweise weist das Querversteifungsprofil 50 eine sich nach oben erstreckende Anschlag- und Ausgleichsrippe 95 auf. Dadurch läßt sich ein verletzungssicherer Ausgleich von lokalen Unebenheiten des Laufflächenblechs 65 und eine zusätzliche Verstärkung des Querversteifungsprofiles 50 schaffen. Dabei kann es zweckmäßig sein, daß die Anschlag- und Ausgleichsrippe 95 eine Höhe 101 aufweist, die größer ist als die stirnseitige Wandstärke 187 des Laufflächenbleches 65.

Eine besonders stabile Verbindung läßt sich dadurch erreichen, daß die Wandteile form- und kraftschlüssig verbunden sind.

Ferner ist es von Vorteil, wenn das Querversteifungsprofil 50, das Laufflächenblech 65 und die Längsholme 53, 53.1, 53.2 eine Wandstärke 106, 187, 102 aufweisen, die einheitlich und gleich groß ist. Dies ermöglicht eine kostengünstige automatische Herstellung unter Anwendung weitgehend gleicher Fügeparameter und eine berechenbare, gleichbleibend gute Qualität der Verbindung.

Nachfolgend wird ein wichtiger Teil der Beschreibung wiedergegeben:
Die Erfindung betrifft eine Metall-Laufplanke (45) für Gerüste, Konsolen, Podien und dgl., die ein Laufflächenblech (65) sowie wenigstens zwei mit diesem fest verbundene Längsholme (53) trägerartigen Querschnitts aufweist. Diese sind mit einem unter dem Laufflächenblech (65) angeordneten Längsversteifungsprofil ausgebildet. Im Bereich der Stirnseiten der Laufplanke (45) sind U-förmig bzw. kastenförmig profilierte, Oberschenkel, Unterschenkel (84) und/oder Seitenschenkel (82) aufweisende Querversteifungsprofile (50) vorgesehen. Der Oberschenkel ist mit dem Laufflächenblech (65), der Unterschenkel (84) und/oder die Seitenschenkel (82) sind mit den Längsholmen (53) in jeweils lokal, mit überlappenden Wandteilen ausgebildeten Verbindungsbereichen fest verbunden, wobei wenigstens einer der sich gegenüberliegenden Wandteile vor dem Verbinden im Verbindungsbereich vorlochungs- und/oder vortrennfrei ausgebildet ist. Die Verbindungsmittel sind unmittelbar mit elektrisch und/oder durch Druckkräfte induziertem Heiß- bzw. Kalt-Werkstoff-Fließen zumindest einer der Wandteile gebildeten Verbindungsstrukturen (191.1, 191.2) vollautomatisch herstellbar ausgebildet. Die Längsholme (53) sind unterhalb des Laufflächenbleches vorzugsweise mit dem Unterschenkel (84) des Querversteifungsprofils (50) mit einer sich quer erstreckenden Verbindungslasche (75) mit wenigstens einem der die Verbindungsstrukturen (191.1, 191.2) aufweisenden Verbindungsmittel fest verbunden.

## Patentansprüche

1. Metall-Laufplanke für Gerüste, Konsolen, Podien und dgl. mit folgenden Merkmalen:
- die Laufplanke (45, 45.1, 45.2) weist ein Laufflächenblech (65) sowie wenigstens zwei mit diesem fest verbundene Längsholme (53, 53.1, 53.2) trägerartigen Querschnitts auf;
- die Längsholme (53, 53.1, 53.2) sind mit einem unter dem Laufflächenblech (65) angeordneten Längsversteifungsprofil ausgebildet;
- die Laufplanke weist Einhängehilfsmittel auf;
- im Bereich der Stirnseiten der Laufplanke (45, 45.1, 45.2) sind Querversteifungsprofile (50) vorgesehen;
- die Querversteifungsprofile (50) haben Oberschenkel (83), Unterschenkel (84) und/oder Seitenschenkel (82, 82.1, 82.2);
- die Querversteifungsprofile (50) weisen mit den Längsholmen (53, 53.1, 53.2) und dem Laufflächenblech (65) sich unter Ausbildung von Überlappungsbereichen gegenüberliegende Wandteile auf;
- der Oberschenkel (83) ist mit dem Laufflächenblech (65) und
- der Unterschenkel (84) und/oder die Seitenschenkel (82, 82.1, 82.2) sind mit den Längsholmen (53, 53.1, 53.2) in den Überlappungsbereichen enthaltenen Verbindungsbereichen (156, 157, 165) mittels eine Verbindung dieser Wandteile ermöglichenden Fügewerkzeugen durch Verbindungsmittel fest verbunden;
- die Verbindungsbereiche sind jeweils lokal begrenzt ausgebildet;
**dadurch gekennzeichnet, daß**
- wenigstens einer der sich gegenüberliegenden Wandteile vor dem Verbinden im Verbindungsbereich vorlochungs- und/oder vortrennfrei ausgebildet ist, wobei
- die Verbindungsmittel zur Verbindung der Querversteifungsprofile (50) mit den Längsholmen (53, 53.1, 53.2) und/oder dem Laufflächenblech (65) unmittelbar mit elektrisch und/oder durch Druckkräfte induziertem Heiß- bzw. Kalt-Werkstoff-Fließen zumindest einer der Wandteile gebildeten, vollautomatisiert herstellbaren Verbindungsstrukturen (191.1, 191.2; 196.1, 196.2, 196.3; 203.1, 203.2, 203.3; 225, 245; 305, 335, 365) ausgebildet sind und wobei;
- die Überlappungsbereiche und benachbarte Wandteile hinsichtlich der Zugänglichkeit der Fügewerkzeuge eine automatische Fertigung ermöglichende Gestaltung und Anordnung aufweisen und wobei
- die Längsholme (53, 53.1, 53.2) an ihrem stirnseitigen Ende (63) eine sich unterhalb des Laufflächenbleches (65) in Querrichtung erstreckende, mit den Längsholmen (53, 53.1, 53.2) einteilig gebildete und von dem Längsversteifungsprofil räumlich getrennte Verbindungslasche (75) aufweisen,
- die mit dem Unterschenkel (84) des Querversteifungsprofils (50) mit wenigstens einem der die Verbindungsstrukturen (191.1, 191.2; 225, 245; 305, 335, 365) aufweisenden Verbindungsmittel fest verbunden ist.

2. Metall-Laufplanke nach einem der übrigen Ansprüche,
**dadurch gekennzeichnet,**
**daß** der Oberschenkel (83) mit dem Laufflächenblech (65) und die Seitenschenkel (82, 82.1, 82.2) mit den Längsholmen (53, 53.1, 53.2) jeweils mit wenigstens einem der die Verbindungsstrukturen aufweisenden Verbindungsmittel fest verbunden sind.

3. Metall-Laufplanke nach einem der übrigen Ansprüche,
**dadurch gekennzeichnet,**
**daß** die Verbindungslasche (75) und der Unterschenkel (84) eine aufeinander abgestimmte Fügefläche aufweisen, die das gleichzeitige oder sequentiell beabstandete Anbringen von wenigstens zwei der Verbindungsstrukturen ermöglicht.

4. Metall-Laufplanke nach einem der übrigen Ansprüche,
**dadurch gekennzeichnet,**
**daß** alle sich jeweils gegenüberliegenden Wandteile Fügeflächen aufweisen, die so aufeinander abgestimmt gestaltet sind, daß sie das gleichzeitige oder sequentiell beabstandete Anbringen von wenigstens zwei der Verbindungsstrukturen ermöglichen.

5. Metall-Laufplanke nach einem der übrigen Ansprüche,
**dadurch gekennzeichnet,**
**daß** die Fügeflächen der sich gegenüberliegenden Wandteile in den jeweiligen Verbindungsbereichen vor dem Verbinden im wesentlichen parallel und eben gestaltet sind.

6. Metall-Laufplanke nach einem der übrigen Ansprüche,
**dadurch gekennzeichnet,**
**daß** die stirnseitige Vorderkante (172) der Verbindungslasche (75) im Bereich des stirnseitigen Endes des Unterschenkels (84) ausgebildet ist.

7. Metall-Laufplanke nach einem der übrigen Ansprüche,
**dadurch gekennzeichnet,**
**daß** die Verbindungsstrukturen im wesentlichen im Bereich der stirnseitigen Enden (63) der Längsholme (53, 53.1, 53.2) vorgesehen sind.

8. Metall-Laufplanke nach einem der übrigen Ansprüche,
**dadurch gekennzeichnet,**
**daß** die Verbindungslasche (75) eine Breite (176) bzw. Tiefe aufweist, die der Tiefe (113) bzw. Breite des Unterschenkels (84) etwa entspricht.

9. Metall-Laufplanke nach einem der übrigen Ansprüche,
**dadurch gekennzeichnet,**
**daß** die Verbindungslasche (75) trapezförmig gestaltet ist.

10. Metall-Laufplanke nach Anspruch 9,
**dadurch gekennzeichnet,**
**daß** die Verbindungslasche (75) mit einer im Übergangsbereich zu den benachbarten Wandteilen des Längsholmes (53, 53.1, 53.2) angeordneten Trapez-Basiskante (171) gestaltet ist, deren Breite (176) etwa der Tiefe (113) des Unterschenkels (84) des Querversteifungsprofils (50) entspricht.

11. Metall-Laufplanke nach wenigstens einem der Ansprüche 9 oder 10,
**dadurch gekennzeichnet,**
**daß** die Verbindungslasche (75) mit einer schräg nach vorn ausgebildeten Trapez-Schrägkante (174) gestaltet ist.

12. Metall-Laufplanke nach wenigstens einem der Ansprüche 9 bis 11,
**dadurch gekennzeichnet,**
**daß** die Übergänge der Trapezkanten (171, 172, 173, 174) gerundet gestaltet sind.

13. Metall-Laufplanke nach einem der übrigen Ansprüche,
**dadurch gekennzeichnet,**
**daß** der Übergangsbereich der Verbindungslasche (75) zu den anschließenden Wandteilen des Längsholmes (53, 53.1, 53.2) gerundet gestaltet ist.

14. Metall-Laufplanke nach einem der übrigen Ansprüche,
**dadurch gekennzeichnet,**
**daß** die Verbindungslasche (75) den Unterschenkel (84) des Querversteifungsprofils (50) untergreift.

15. Metall-Laufplanke nach einem der übrigen Ansprüche,
**dadurch gekennzeichnet,**
**daß** das Querversteifungsprofil (50) mit wenigstens zwei in Richtung der Längsachse der Laufplanke (45, 45.1, 45.2) beabstandeten, die Verbindungsstrukturen (191.1, 191.2) aufweisenden Verbindungsmitteln mit der Verbindungslasche (75) verbunden sind.

16. Metall-Laufplanke nach Ansprch 15,
**dadurch gekennzeichnet,**
**daß** die benachbarten Verbindungsstrukturen (191.1, 191.2) einen Abstand (192) zueinander aufweisen, der dem 10 bis 15-fachen der Wandstärke (175) der Verbindungslasche (75) und/oder der Wandstärke (106) des Querversteifungsprofils (50) im Überlappungsbereich entspricht.

17. Metall-Laufplanke nach Anspruch 15,
**dadurch gekennzeichnet,**
**daß** die benachbarten Verbindungsstrukturen (191.1, 191.2) einen Abstand (192) zueinander aufweisen, der etwa dem 0,4 bis 0,5-fachen der Tiefe (113) des Unterschenkels (84) des Querversteifungsprofils (50) entspricht.

18. Metall-Laufplanke nach einem der übrigen Ansprüche,
**dadurch gekennzeichnet,**
**daß** die Verbindungsstrukturen (191.1, 191.2) symmetrisch zur Querachse (194) des Querversteifungsprofils (50) angeordnet sind.

19. Metall-Laufplanke nach einem der übrigen Ansprüche,
**dadurch gekennzeichnet,**
**daß** die Verbindungsstrukturen (191.1, 191.2) von den vertikalen Außenflächen (89) der Längsholme (53, 53.1, 53.2) einen Abstand (193) aufweisen, der etwa dem Abstand (192) zwischen den benachbarten Verbindungsstrukturen entspricht.

20. Metall-Laufplanke nach einem der übrigen Ansprüche,
**dadurch gekennzeichnet,**
**daß** die Seitenschenkel (82) rechteckförmig gestaltet sind.

21. Metall-Laufplanke nach einem der übrigen Ansprüche,
**dadurch gekennzeichnet,**
**daß** die Seitenschenkel (82) mit drei dreieckförmig zueinander angeordneten Verbindungsstrukturen (196.1, 196.2, 196.3) mit den Längsholmen (53, 53.1, 53.2) verbunden sind.

22. Metall-Laufplanke nach Anspruch 21,
**dadurch gekennzeichnet,**
**daß** zwei Verbindungsstrukturen (196.1, 196.2) der drei Verbindungsstrukturen (196.1, 196.2, 196.3) etwa parallel zur Längsachse der Laufplanke (45) ausgerichtet und unterhalb der dritten Verbindungsstruktur (196.3) angeordnet sind.

23. Metall-Laufplanke nach Anspruch 22,
**dadurch gekennzeichnet,**
**daß** die beiden unteren Verbindungsstrukturen (196.1, 196.2) einen Abstand (197) zueinander aufweisen, der etwa der Tiefe (113) der Unterschenkel (84) des Querversteifungsprofils (50) entspricht.

24. Metall-Laufplanke nach wenigstens einem der Ansprüche 22 oder 23,
**dadurch gekennzeichnet,**
**daß** die stirnseitig angeordneten Verbindungsstrukturen (196.1) von dem stirnseitigen Ende (99) des Seitenschenkels (82, 82.1, 82.2) bzw. von der Vertikalaußenwand (81) einen Abstand (199) aufweisen, der etwa dem Abstand (198) der dritten Verbindungsstruktur (196.3) von den unteren Verbindungsstrukturen (196.1, 196.2) entspricht.

25. Metall-Laufplanke nach wenigstens einem der Ansprüche 21 bis 24,
**dadurch gekennzeichnet,**
**daß** die drei Verbindungsstrukturen (196.1, 196.2, 196.3) derart angeordnet sind, daß ein gleichseitiges Dreieck gebildet ist.

26. Metall-Laufplanke nach wenigstens einem der Ansprüche 22 bis 25,
**dadurch gekennzeichnet,**
**daß** die unteren Verbindungsstrukturen (196.1, 196.2) von der unteren Stirnkante (117) der Seitenschenkel (82, 82.1, 82.2) bzw. von dem Unterschenkel (84) des Querversteifungsprofils (50) einen Abstand (201) aufweisen, der dem Abstand (199) der stirnseitigen Verbindungsstruktur (196.1) von dem stirnseitigen Ende (99) der Seitenschenkel (82, 82.1, 82.2) etwa entspricht.

27. Metall-Laufplanke nach einem der übrigen Ansprüche,
**dadurch gekennzeichnet,**
**daß** die Querschenkel (83) rechteckförmig gestaltet sind.

28. Metall-Laufplanke nach einem der übrigen Ansprüche,
**dadurch gekennzeichnet,**
**daß** der Oberschenkel (83) mit drei parallel zur Stirnkante (80) des Laufflächenblechs (65) und in einer Reihe angeordneten Verbindungsstrukturen (203.1, 203.2, 203.3) mit dem Laufflächenblech (65) verbunden ist.

29. Metall-Laufplanke nach einem der übrigen Ansprüche,
**dadurch gekennzeichnet,**
**daß** die Verbindungsstrukturen (203.1, 203.2, 203.3) von der Stirnkante (80) des Laufflächenblechs (65) einen Abstand (204) aufweisen, der etwa dem 6- bis 9-fachen der Wandstärke (187) des Laufflächenblechs (65) im Verbindungsbereich entspricht.

30. Metall-Laufplanke nach einem der übrigen Ansprüche,
**dadurch gekennzeichnet,**
**daß** die Verbindungsmittel zur Verbindung der Querversteifungsprofile (50) mit den Längsholmen (53, 53.1, 53.2) und/oder dem Laufflächenblech (65) unmittelbar mit durch Druckkräfte induziertem Kalt-Werkstoff-Fließen jeder der Wandteile (221, 222, 241, 242; 301, 302; 331, 332; 361, 362) gebildeten, vollautomatisiert herstellbaren Verbindungsstrukturen (191.1, 191.2; 196.1, 196.2, 196.3; 203.1, 203.2, 203.3; 225, 245, 305, 335, 365) ausgebildet sind.

31. Metall-Laufplanke nach einem der übrigen Ansprüche,
**dadurch gekennzeichnet,**
**daß** die Verbindungsstrukturen (191.1, 191.2; 196.1, 196.2, 196.3; 203.1, 203.2, 203.3; 225, 245, 305, 335, 365) nicht über die außen liegende freie Oberfläche (223, 224; 243, 244; 303, 304; 333, 334; 363, 364) der miteinander verbundenen Wandteile (221, 222, 241, 242; 301, 302; 331, 332; 361, 362) hervorstehen.

32. Metall-Laufplanke nach einem der übrigen Ansprüche, **dadurch gekennzeichnet,**
**daß** die Verbindungsstrukturen (245) nicht über die innen liegende freie Oberfläche (244) der miteinander verbundenen Wandteile (241, 242) hervorstehen.

33. Metall-Laufplanke nach einem der übrigen Ansprüche,
**dadurch gekennzeichnet,**
**daß** die Verbindungsstrukturen (191.1, 191.2; 196.1, 196.2, 196.3; 203.1, 203.2, 203.3; 225, 245, 305, 335, 365) mit Hintergreifstrukturen (230, 250, 310, 340, 370) ausgebildet sind.

34. Metall-Laufplanke nach Anspruch 33,
**dadurch gekennzeichnet,**
**daß** die Hintergreifstrukturen (230, 250, 310, 340, 370) einen die Ränder der außen liegenden Wandteile (221, 241, 301, 331, 361) hintergreifenden Schließkopf (209, 249, 309, 339, 369) aufweisen.

35. Metall-Laufplanke nach einem der übrigen Ansprüche,
**dadurch gekennzeichnet,**
**daß** die Verbindungsstrukturen (191.1, 191.2; 196.1, 196.2, 196.3; 203.1, 203.2, 203.3; 225, 245, 305, 335, 365) druckknopfartig ausgebildet sind.

36. Metall-Laufplanke nach einem der übrigen Ansprüche,
**dadurch gekennzeichnet,**
**daß** die sich gegenüberliegend überlappenden Wandteile (221, 222, 241, 242; 301, 302; 331, 332; 361, 362) aus unterschiedlichen Werkstoffen gebildet sind.

37. Metall-Laufplanke nach einem der übrigen Ansprüche,
**dadurch gekennzeichnet,**
**daß** die Wandteile (221, 222, 241, 242; 301, 302; 331, 332; 361, 362) aus Stahl oder aus Leichtmetall, insbesondere aus Aluminium, bestehen.

38. Metall-Laufplanke nach einem der übrigen Ansprüche,
**dadurch gekennzeichnet,**
**daß** die Wandteile vor dem Verbinden mit einer Oberflächen-Vergütung bzw. -Beschichtung versehen sind.

39. Metall-Laufplanke nach Anspruch 38,
**dadurch gekennzeichnet,**
**daß** die mit der Oberflächen-Vergütung bzw. -Beschichtung versehenen Wandteile nach dem Anbringen der Verbindungsmittel nacharbeitsfrei verbunden sind.

40. Metall-Laufplanke nach wenigstens einem der Ansprüche 1 bis 39,
**dadurch gekennzeichnet,**
**daß** die Verbindungsmittel Hilfsfügeteile enthalten.

41. Metall-Laufplanke nach Anspruch 40,
**dadurch gekennzeichnet,**
**daß** die Hilfsfügeteile mit Halbhohlnieten (226) gebildet sind.

42. Metall-Laufplanke nach Anspruch 40,
**dadurch gekennzeichnet,**
**daß** die Hilfsfügeteile mit Vollnieten (246) gebildet sind.

43. Metall-Laufplanke nach Anspruch 42,
**dadurch gekennzeichnet,**
**daß** die Hilfsfügeteile vor und nach dem Verbinden der Wandteile (241, 242) eine im wesentlichen unveränderte äußere Formgestalt aufweisen.

44. Metall-Laufplanke nach wenigstens einem der Ansprüche 40 bis 43,
**dadurch gekennzeichnet,**
**daß** die Hilfsfügeteile mit über ihren Umfang angeordneten Erhöhungen und/oder Vertiefungen ausgebildet sind.

45. Metall-Laufplanke nach Anspruch 44,
**dadurch gekennzeichnet,**
**daß** als Vertiefungen Ringnuten (251) vorgesehen sind.

46. Metall-Laufplanke nach wenigstens einem der Ansprüche 40 bis 45,
**dadurch gekennzeichnet,**
**daß** die Hilfsfügeteile zumindest einem der Wandteile einen Schließkopf (229, 249) ausbilden.

47. Metall-Laufplanke nach wenigstens einem der Ansprüche 1 bis 39,
**dadurch gekennzeichnet,**
**daß** die Verbindungsstrukturen (191.1, 191.2; 196.1, 196.2, 196.3; 203.1, 203.2, 203.3; 305, 335, 365) ausschließlich mit den sich gegenüberliegenden Wandteilen (301, 302; 331, 332; 361, 362) ausgebildet sind.

## Claims

1. Metal gangboard for scaffolds, brackets, platforms and the like, with the following features:
- the gangboard (45, 45.1, 45.2) comprises a tread surface plate (65) as well as at least two longitudinal beams (53, 53.1, 53.2), which are fixedly connected therewith, of girder-like cross-section;
- the longitudinal beams (53, 53.1, 53.2) are constructed with a longitudinal reinforcing profile arranged under the tread surface plate (65);
- the gangboard has suspension aids;
- transverse reinforcing profiles (50) are provided in the region of the end faces of the gangboard (45, 45.1, 45.2);
- the transverse reinforcing profiles (50) have upper limb (83), lower limb (84) and/or side limbs (82, 82.1, 82.2);
- the transverse reinforcing profiles (50) have, together with the longitudinal beams (53, 53.1, 53.2) and the tread surface plate (65), wall parts which are opposite one another with formation of overlapping regions;
- the upper limb (83) is fixedly connected with the tread surface plate (65) and
- the lower limb (84) and/or the side limbs (82, 82.1, 82.2) is or are fixedly connected with the longitudinal beams (53, 53.1, 53.2) in connecting regions (156, 157, 165), which contain the overlapping regions, by means of joining tools which enable connection of these wall parts, by connecting means;
- the connecting regions are each constructed to be locally limited;
**characterised in that**
- at least one of the mutually opposite wall parts is constructed, prior to the connecting in the connecting region, to be free of pre-punching and/or pre-separation, wherein
- the connecting means for connecting the transverse reinforcing profiles (50) with the longitudinal beams (53, 53.1, 53.2) and/or the tread surface plate (65) are constructed directly with connecting structures (191.1, 191.2; 196.1, 196.2, 196.3; 203.1, 203.2, 203.3; 225, 245; 305, 335, 365) which are producible fully automatically and formed by hot-material or cold-material flow, which is induced electrically and/or by pressure forces, of at least one of the wall parts and wherein;
- the overlapping regions and adjacent wall parts have with respect to accessibility of the joining tools a design and arrangement enabling automatic production and wherein
- the longitudinal beams (53, 53.1, 53.2) have at their end-face end (63) a connecting strap (75), which extends underneath the tread surface plate (65) in transverse direction, is formed integrally with the longitudinal beams (53, 53.1, 53.2) and is physically separate from the longitudinal stiffening profile and
- which is fixedly connected with the lower limb (84) of the transverse reinforcing profile (50) by at least one of the connecting means having the connecting structures (191.1, 191.2; 225, 245; 305, 335, 365).

2. Metal gangboard according to one of the other claims, **characterised in that** the upper limb (83) is fixedly connected with the tread surface plate (65), and the side limbs (82, 82.1, 82.2) are connected with the longitudinal beams (53, 53.1, 53.2) respectively by at least one connecting means having the connecting structures.

3. Metal gangboard according to one of the other claims, **characterised in that** the connecting strap (75) and the lower limb (84) have a mutually matched joining surface enabling simultaneous or sequentially spaced mounting of at least two of the connecting structures.

4. Metal gangboard according to one of the other claims, **characterised in that** all respective mutually opposite wall parts have joining surfaces which are shaped to be so matched to one another that they enable simultaneous or sequentially spaced mounting of at least two of the connecting structures.

5. Metal gangboard according to one of the other claims, **characterised in that** the joining surfaces of the mutually opposite wall parts are formed to be substantially parallel and planar in the respective connecting regions prior to the connecting.

6. Metal gangboard according to one of the other claims, **characterised in that** the end-face front edge (172) of the connecting strap (75) is formed in the region of the end-face end of the lower limb (84).

7. Metal gangboard according to one of the other claims, **characterised in that** the connecting structures are provided substantially in the region of the end-face ends (63) of the longitudinal beams (53, 53.1, 53.2).

8. Metal gangboard according to one of the other claims, **characterised in that** the connecting strap (75) has a width (176) or depth which approximately corresponds with the depth (113) or width of the lower limb (84).

9. Metal gangboard according to one of the other claims, **characterised in that** the connecting strap (75) is formed to be trapezium-shaped.

10. Metal gangboard according to claim 9, **characterised in that** the connecting strap (75) is formed with a trapezium base edge (171), which is arranged in the transition region to the adjacent wall parts of the longitudinal beam (53, 53.1, 53.2) and the width (176) of which approximately corresponds with the depth (113) of the lower, limb (84) of the transverse stiffening profile (50).

11. Metal gangboard according to at least one of claims 9 and 10, **characterised in that** the connecting strap (75) is formed with a trapezium oblique edge (174) constructed with a forward inclination.

12. Metal gangboard according to at least one of claims 9 to 11, **characterised in that** the transitions of the trapezium edges (171, 172, 173, 174) are formed to be radiused.

13. Metal gangboard according to one of the other claims, **characterised in that** the transition region of the connecting strap (75) is formed to be radiused with respect to the adjoining wall parts of the longitudinal beam (53, 53.1, 53.2).

14. Metal gangboard according to one of the other claims, **characterised in that** the connecting strap (75) engages below the lower limb (84) of the transverse reinforcing profile (50).

15. Metal gangboard according to one of the other claims, **characterised in that** the transverse reinforcing profile (50) is connected with the connecting strap (75) by at least two connecting means which are spaced apart in the direction of the longitudinal axis of the gangboard (45, 45.1, 45.2) and which have the connecting structures (191.1, 191.2).

16. Metal gangboard according to claim 15, **characterised in that** the adjacent connecting structures (191.1, 191.2) have a spacing (192) from one another which corresponds with 10 to 15 times the wall thickness (175) of the connecting strap (75) and/or the wall thickness (106) of the transverse reinforcing profile (50) in the overlapping region.

17. Metal gangboard according to claim 15, **characterised in that** the adjacent connecting structures (191.1, 191.2) have a spacing (192) from one another which corresponds with approximately 0.4 to 0.5 times the depth (113) of the lower limb (84) of the transverse reinforcing profile (50).

18. Metal gangboard according to one of the other claims, **characterised in that** the connecting structures (191.1, 191.2) are arranged symmetrically with respect to the transverse axis (194) of the transverse reinforcing profile (50).

19. Metal gangboard according to one of the other claims, **characterised in that** the connecting structures (191.1, 191.2) have a spacing (193) from the vertical outer surfaces (89) of the longitudinal beams (53, 53.1, 53.2) which approximately corresponds with the spacing (192) between the adjacent connecting structures.

20. Metal gangboard according to one of the other claims, **characterised in that** the side limbs (82) are formed to be rectangular.

21. Metal gangboard according to one of the other claims, **characterised in that** the side limbs (82) are connected with the longitudinal beams (53, 53.1, 53.2) by three connecting structures (196.1, 196.2, 196.3) arranged triangularly relative to one another.

22. Metal gangboard according to claim 21, **characterised in that** two connecting structures (196.1, 196.2) of the three connecting structures (196.1, 196.2, 196.3) are aligned approximately parallel to the longitudinal axis of the gangboard (45) and arranged below the third connecting structure (196.3).

23. Metal gangboard according to claim 22, **characterised in that** the two lower connecting structures (196.1, 196.2) have a spacing (197) from one another which approximately corresponds with the depth (113) of the lower limb (84) of the transverse reinforcing profile (50).

24. Metal gangboard according to at least one of claims 22 and 23, **characterised in that** the connecting structures (196.1), which are arranged at the end face, have a spacing (199) from the end-face end (99) of the side limb (82, 82.1, 82.2) or from the vertical outer wall (81) which approximately corresponds with the spacing (198) of the third connecting structure (196.3) from the lower connecting structures (196.1, 196.2).

25. Metal gangboard according to at least one of claims 21 to 24, **characterised in that** the three connecting structures (196.1, 196.2, 196.3) are arranged in such a manner that an equilateral triangle is formed.

26. Metal gangboard according to at least one of claims 22 to 25, **characterised in that** the lower connecting structures (196.1, 196.2) have a spacing (201) from the lower end edge (117) of the side limbs (82, 82.1, 82.2) or from the lower limb (84) of the transverse reinforcing profile (50) which approximately corresponds with the spacing (199) of the end-face connecting structure (196.1) from the end-face end (99) of the side limbs (82, 82.1, 82.2).

27. Metal gangboard according to one of the other claims, **characterised in that** the transverse limbs (83) are formed to be rectangular.

28. Metal gangboard according to one of the other claims, **characterised in that** the upper limb (83) is connected with the tread surface plate (65) by three connecting structures (203.1, 203.2, 203.3) arranged parallel to the end edge (80) of the tread surface plate (65) and in a row.

29. Metal gangboard according to one of the other claims, **characterised in that** the connecting structures (203.1, 203.2, 203.3) have a spacing (204) from the end edge (80) of the tread surface plate (65) which approximately corresponds with 6 to 9 times the wall thickness (187) of the tread surface plate (65) in the connecting region.

30. Metal gangboard according to one of the other claims, **characterised in that** the connecting means are constructed for connection of the transverse reinforcing profiles (50) with the longitudinal beams (53, 53.1, 53.2) and/or the tread surface plate (65) directly with connecting structures (191.1, 191.2; 196.1, 196.2, 196.3; 203.1, 203.2, 203.3; 225, 245, 305, 335, 365), which are producible fully automatically and formed by cold-material flow, which is induced by pressure forces, of each of the wall parts (221, 222, 241, 242; 301, 302; 331, 332; 361, 362).

31. Metal gangboard according to one of the other claims, **characterised in that** the connecting structures (191.1, 191.2; 196.1, 196.2, 196.3; 203.1, 203.2, 203.3; 225, 245, 305, 335, 365) do not protrude beyond the outwardly disposed free surface (223, 224; 243, 244; 303, 304; 333, 334; 363, 364) of the interconnected wall parts (221, 222, 241, 242; 301, 302; 331, 332; 361, 362).

32. Metal gangboard according to one of the other claims, **characterised in that** the connecting structures (245) do not protrude beyond the inwardly disposed free surface of the interconnected wall parts (241, 242).

33. Metal gangboard according to one of the other claims, **characterised in that** the connecting structures (191.1, 191.2; 196.1, 196.2, 196.3; 203.1, 203.2, 203.3; 225, 245, 305, 335, 365) are formed with undercuts structures (230, 250, 310, 340, 370).

34. Metal gangboard according to claim 33, **characterised in that** the undercuts structures (230, 250, 310, 340, 370) have a closing head (209, 249, 309, 339, 369) engaging under the edges of the outwardly disposed wall parts (221, 241, 301, 331, 361).

35. Metal gangboard according to one of the other claims, **characterised in that** the connecting structures (191.1, 191.2; 196.1, 196.2, 196.3; 203.1, 203.2, 203.3; 225, 245, 305, 335, 365) are constructed in the manner of a pressbutton.

36. Metal gangboard according to one of the other claims, **characterised in that** the mutually opposite overlapping wall parts (221, 222, 241, 242; 301, 302; 331, 332; 361, 362) are formed from different materials.

37. Metal gangboard according to one of the other claims, **characterised in that** the wall parts (221, 222, 241, 242; 301, 302; 331, 332; 361, 362) consist of steel or light metal, particularly of aluminium.

38. Metal gangboard according to one of the other claims, **characterised in that** the wall parts are provided with a surface enhancement or coating prior to the connecting.

39. Metal gangboard according to claim 38, **characterised in that** the wall parts provided with the surface enhancement or coating are connected free of refinishing after application of the connecting means.

40. Metal gangboard according to at least one of claims 1 to 39, **characterised in that** the connecting means contain auxiliary joining parts.

41. Metal gangboard according to claim 40, **characterised in that** the auxiliary joining parts are formed by semitubular rivets (226).

42. Metal gangboard according to claim 40, **characterised in that** the auxiliary joining parts are formed by solid rivets (246).

43. Metal gangboard according to claim 42, **characterised in that** the auxiliary joining parts have a substantially unchanged external shape before and after connecting of the wall parts (241, 242).

44. Metal gangboard according to at least one of claims 40 to 43, **characterised in that** the auxiliary joining parts are constructed with elevations and/or depressions arranged over their circumference.

45. Metal gangboard according to claim 44, **characterised in that** annular grooves (251) are provided as depressions.

46. Metal gangboard according to at least one of claims 40 to 45, **characterised in that** the auxiliary joining parts of at least one of the wall parts form a closing head (229, 249).

47. Metal gangboard according to at least one of claims 1 to 39, **characterised in that** the connecting structures (191.1, 191.2; 196.1, 196.2, 196.3; 203.1, 203.2, 203.3; 225, 245, 305, 335, 365) are constructed exclusively with the mutually opposite wall parts (301, 302; 331, 332; 361, 362).

## Revendications

1. Plancher métallique pour des échafaudages, des consoles, des estrades, et similaires présentant les caractéristiques suivantes :
- le plancher (45, 45.1, 45.2) présente une tôle de surface de marche (65) et au moins deux longerons (53, 53.1, 53.2) reliés de façon fixe à cette tôle avec section en forme de support ;
- les longerons (53, 53.1, 53.2) sont conçus avec un profilé de renfort longitudinal disposé au-dessous de la tôle de surface de marche (65) ;
- le plancher présente des moyens auxiliaires d'accrochage ;
- des profilés de renfort transversaux (50) sont prévus dans la zone des côtés avant du plancher (45, 45.1, 45.2) ;
- les profilés de renfort transversaux (50) ont des branches supérieures (83), des branches inférieures (84) et/ou des branches latérales (82, 82.1, 82.2) ;
- les profilés de renfort transversaux (50) présentent avec les longerons (53, 53.1, 53.2) et la tôle de surface de marche (65) des parties de paroi qui se font face en formant des zones de chevauchement ;
- la branche supérieure (83) est reliée de façon fixe à la tôle de surface de marche (65) et
- la branche inférieure (84) et/ou les branches latérales (82, 82.1, 82.2) sont reliées de façon fixe aux longerons (53, 53.1, 53.2) dans les zones de liaison (156, 157, 165) contenant les zones de chevauchement au moyen d'outils d'assemblage permettant une liaison de ces parties de paroi par des moyens de liaison ;
- les zones de liaison sont conçues à chaque fois de façon délimitée localement ;
**caractérisé en ce que**
- au moins l'une des parties de paroi qui se font face est conçue sans pré-perçage et/ou sans pré-séparation avant la liaison dans la zone de liaison,
- les moyens de liaison pour la liaison des profilés de renfort transversaux (50) avec les longerons (53, 53.1, 53.2) et/ou la zone de surface de marche (65) sont conçus avec des structures de liaison (191.1, 191.2 ; 196.1, 196.2, 193.3 ; 203.1, 203.2, 203.3 ; 225, 245 ; 305 , 335, 365) pouvant être fabriquées de façon entièrement automatisée et formées directement avec l'écoulement de matériau à chaud ou à froid induit électriquement et/ou par des forces de pression d'au moins une de parties de paroi et
- les zones de chevauchement et des parties de paroi voisines présentant une conception et une disposition permettant une fabrication automatique en ce qui concerne l'accessibilité des outils d'assemblage et
- les longerons (53, 53.1, 53.2) présentant sur leur extrémité (63) côté avant une patte de liaison (75) s'étendant au-dessous de la tôle de surface de marche (65) dans le sens transversal, formée d'une seule pièce avec les longerons (53, 53.1, 53.2) et séparée dans l'espace du profilé de renfort longitudinal,
- qui est reliée de façon fixe avec la branche inférieure (84) du profilé de renfort transversal (50) avec au moins l'un des moyens de liaison présentant les structures de liaison (191.1, 191.2, 225, 245 . 305, 335, 365).

2. Plancher métallique selon l'une quelconque des autres revendications,
**caractérisé en ce que**
la branche supérieure (83) avec la zone de surface de marche (65) et les branches latérales (82, 82.1, 82.2) avec les longerons longitudinaux (53, 53.1, 53.2) sont reliées de façon fixe respectivement avec au moins l'un des moyens d'assemblage présentant les structures de liaison.

3. Plancher métallique selon l'une quelconque des autres revendications,
**caractérisé en ce que**
la patte de liaison (75) et la branche inférieure (84) présentent une surface d'assemblage adaptée l'une à l'autre, qui permet le placement espacé simultané ou séquentielle d'au moins deux des structures de liaison.

4. Plancher métallique selon l'une quelconque des autres revendications,
**caractérisé en ce que**
toutes les parties de paroi se faisant face présentent des surfaces d'assemblage qui sont conçues et adaptées l'une à l'autre de telle sorte qu'elles permettent le placement espacé simultané ou séquentiel d'au moins deux des structures de liaison.

5. Plancher métallique selon l'une quelconque des autres revendications,
**caractérisé en ce que**
les surfaces d'assemblage des parties de paroi se faisant face dans les zones de liaison respectives sont sensiblement planes et parallèles avant la liaison.

6. Plancher métallique selon l'une quelconque des autres revendications,
**caractérisé en ce que**
le bord frontal (172) côté avant de la patte de liaison (75) est réalisé dans la zone de l'extrémité côté avant de la branche inférieure (84).

7. Plancher métallique selon l'une quelconque des autres revendications,
**caractérisé en ce que**
les structures de liaison sont prévues essentiellement dans la zone des extrémités (63) côté avant des longerons (53, 53.1, 53.2).

8. Plancher métallique selon l'une quelconque des autres revendications,
**caractérisé en ce que**
la patte de liaison (75) présente une largeur (176) ou une profondeur qui correspond à peu près à la profondeur (113) ou à la largeur de la branche intérieure (84).

9. Plancher métallique selon l'une quelconque des autres revendications,
**caractérisé en ce que**
la patte de liaison (75) a une conception en forme de trapèze.

10. Plancher métallique selon la revendication 9,
**caractérisé en ce que**
la patte de liaison (75) est conçue avec un bord de base de trapèze (171) disposé dans la zone de transition avec les parties de paroi voisines du longeron (53, 53.1, 53.2), dont la largeur (176) correspond à peu près à la profondeur (113) de la branche inférieure (84) du profilé de renfort transversal (50).

11. Plancher métallique selon au moins l'une quelconque des revendications 9 ou 10,
**caractérisé en ce que**
la patte de liaison (75) est conçue avec un bord incliné de trapèze (174) réalisé de façon inclinée vers l'avant.

12. Plancher métallique selon au moins l'une quelconque des revendications 9 à 11,
**caractérisé en ce que**
les transitions des bords de trapèze (171, 172, 173, 174) sont conçues arrondies.

13. Plancher métallique selon l'une quelconque des autres revendications,
**caractérisé en ce que**
la zone de transition de la patte de liaison (75) avec les parties de paroi consécutives du longeron (53, 53.1, 53.2) est conçue arrondie.

14. Plancher métallique selon l'une quelconque des autres revendications,
**caractérisé en ce que**
la patte de liaison (75) saisit par-dessous la branche inférieure (84) du profilé de renfort transversal (50).

15. Plancher métallique selon l'une quelconque des autres revendications,
**caractérisé en ce que**
le profilé de renfort transversal (50) est relié par au moins deux moyens de liaison espacés en direction de l'axe longitudinal du plancher (45, 45.1, 45.2) et présentant les structures de liaison (191.1, 191.2) à la patte de liaison (75).

16. Plancher métallique selon la revendication 15,
**caractérisé en ce que**
les structures de liaison (191.1, 191.2) voisines présentent entre elles un espacement (192) qui correspond à 10 jusqu'à 15 fois l'épaisseur de paroi (175) de la patte de liaison (75) et/ou l'épaisseur de paroi (106) du profilé de renfort transversal (50) dans la zone de chevauchement.

17. Plancher métallique selon la revendication 15,
**caractérisé en ce que**
les structures de liaison (191.1, 191.2) voisines présentent un espacement (192) qui correspond à peu près à 0,4 à 0,5 fois la profondeur (113) de la branche inférieure (84) du profilé de renfort transversal (50).

18. Plancher métallique selon l'une quelconque des autres revendications,
**caractérisé en ce que**
les structures de liaison (191.1, 191.2) sont disposées de façon symétrique par rapport à l'axe transversal (194) du profilé de renfort transversal (50).

19. Plancher métallique selon l'une quelconque des autres revendications,
**caractérisé en ce que**
les structures de liaison (191.1, 191.2) présentent par rapport aux surfaces extérieures (89) verticales des longerons (53, 53.1, 53.2) une distance (193) qui correspond à peu près à la distance (192) entre les structures de liaison voisines.

20. Plancher métallique selon l'une quelconque des autres revendications,
**caractérisé en ce que**
les branches latérales (82) sont conçues avec une forme rectangulaire.

21. Plancher métallique selon l'une quelconque des autres revendications,
**caractérisé en ce que**
les branches latérales (82) sont reliées aux longerons (53, 53.1, 53.2) par trois structures de liaison (196.1, 196.2, 196.3) disposées en forme de triangle les unes par rapport aux autres.

22. Plancher métallique selon la revendication 21,
**caractérisé en ce que**
deux structures de liaison (196.1, 196.2) des trois structures de liaison (196.1, 196.2, 196.3) sont orientées à peu près parallèlement à l'axe longitudinal du plancher (45) et sont disposées au-dessous de la troisième structure de liaison (196.3)

23. Plancher métallique selon la revendication 22,
**caractérisé en ce que**
les deux structures de liaison (196.1, 196.2) inférieures présentent l'une par rapport à l'autre une distance (197) qui correspond à peu près à la profondeur (113) des branches inférieures (84) du profilé de renfort transversal (50).

24. Plancher métallique selon au moins l'une quelconque des revendications 22 ou 23,
**caractérisé en ce que**
les structures de liaison (196.1) disposées côté avant présentent par rapport à l'extrémité (99) côté avant de la branche latérale (82, 82.1, 82.2) ou à la paroi extérieure verticale (81), une distance (199) qui correspond à peu près à la distance (198) de la troisième structure de liaison (196.3) par rapport aux structures de liaison (196.1, 196.2) inférieures.

25. Plancher métallique selon au moins l'une quelconque des revendications 21 à 24,
**caractérisé en ce que**
les trois structures de liaison (196.1, 196.2, 196.3) sont disposées de telle sorte qu'un triangle équilatéral est formé.

26. Plancher métallique selon au moins l'une quelconque des revendications 22 à 25,
**caractérisé en ce que**
les structures de liaison (196.1, 196.2) inférieures présentent par rapport au bord avant (117) inférieur des branches latérales (82, 82.1, 82.2) ou à la branche inférieure (84) du profilé de renfort transversal (50) une distance (201) qui correspond à peu près à la distance (199) de la structure de liaison (196.1) côté avant à l'extrémité (99) côté avant des branches latérales (82, 82.1, 82.2).

27. Plancher métallique selon l'une quelconque des autres revendications,
**caractérisé en ce que**
les branches latérales (83) sont conçues avec une forme rectangulaire.

28. Plancher métallique selon l'une quelconque des autres revendications,
**caractérisé en ce que**
la branche supérieure (83) est reliée à la tôle de surface de marche (65), par trois structures de liaison (203.1, 203.2, 203.3) disposées parallèlement au bord avant (80) de la tôle de surface de marche (65) et sur une rangée.

29. Plancher métallique selon l'une quelconque des autres revendications,
**caractérisé en ce que**
les structures de liaison (203.1, 203.2, 203.3) présentent par rapport au bord avant (80) de la tôle de surface de marche (65) une distance (204) qui correspond à peu près à 6 fois jusqu'à 9 fois l'épaisseur de paroi (187) de la tôle de surface de marche (65) dans la zone de liaison.

30. Plancher métallique selon l'une quelconque des autres revendications,
**caractérisé en ce que**
les moyens de liaison pour la liaison des profilés de renfort transversaux (50) avec les longerons (53, 53.1, 53.2) et/ou la tôle de surface de marche (65) sont conçus avec des structures de liaison (191.1, 191.2 ; 196.1, 196.2, 196.3 ; 203.1, 203.2, 203.3 ; 225, 245, 305, 335, 365) pouvant être fabriquées de façon entièrement automatisée et étant formées directement par écoulement de matériau à froid induit par des forces de pression de chacune des parties de paroi (221, 222, 241, 242 ; 301, 302 ; 331, 332 ; 361, 362).

31. Plancher métallique selon l'une quelconque des autres revendications,
**caractérisé en ce que**,
les structures de liaison (191.1, 191.2 ; 196.1, 196.2, 196.3 ; 203.1, 203.2, 203.3 ; 225, 245, 305, 335, 365) ne dépassent pas de la surface libre se trouvant à l'extérieur (223, 224 ; 243, 244 ; 303, 304 ; 333, 334 ; 363, 364) des parties de paroi (221, 222, 241, 242 ; 301, 302 ; 331, 332 ; 361, 362) reliées ensemble.

32. Plancher métallique selon l'une quelconque des autres revendications,
**caractérisé en ce que**
les structures de liaison (245) ne dépassent pas des surfaces (244) libres, se trouvant à l'intérieur, des parties de paroi (241, 242) reliées entre elles.

33. Plancher métallique selon l'une quelconque des autres revendications,
**caractérisé en ce que**
les structures de liaison (191.1, 191.2 ; 196.1, 196.2, 196.3 ; 203.1, 203.2, 203.3 ; 225, 245, 305, 335, 365) sont formées avec des structures à saisie par l'arrière (230, 250, 310, 340, 370).

34. Plancher métallique selon la revendication 33,
**caractérisé en ce que**
les structures à saisie par l'arrière (230, 250, 310, 340, 370) présentent une tête de fermeture (209, 249, 309, 339, 369) saisissant par l'arrière les bords des parties de paroi (221, 241, 301, 331, 361) se trouvant à l'extérieur.

35. Plancher métallique selon l'une quelconque des autres revendications,
**caractérisé en ce que**
les structures de liaison (191.1, 191.2 ; 196.1, 196.2, 196.3 ; 203.1, 203.2, 203.3 ; 225, 245, 305, 335, 365) sont conformées en bouton pression.

36. Plancher métallique selon l'une quelconque des autres revendications,
**caractérisé en ce que**
les parois opposées se chevauchant (221, 222, 241, 242 ; 301, 302 ; 331, 332 ; 361, 362) sont constituées de différents matériaux.

37. Plancher métallique selon l'une quelconque des autres revendications,
**caractérisé en ce que**
les parties de paroi (221, 222, 241, 242 ; 301, 302 ; 331, 332 ; 361, 362) sont constituées d'acier ou de métal léger, en particulier d'aluminium.

38. Plancher métallique selon l'une quelconque des autres revendications,
**caractérisé en ce que**
les parties de paroi sont dotées d'une amélioration ou d'un traitement de surface avant assemblage.

39. Plancher métallique selon la revendication 38,
**caractérisé en ce que**
les parties de paroi dotées d'une amélioration ou d'un traitement de surface sont assemblées après pose des moyens d'assemblage, sans opération complémentaire.

40. Plancher métallique selon au moins l'une quelconque revendications 1 à 39,
**caractérisé en ce que**
les moyens de liaison comportent des parties d'assemblage auxiliaires.

41. Plancher métallique selon la revendication 40,
**caractérisé en ce que**
les parties d'assemblage auxiliaires sont constituées de rivets creux (226).

42. Plancher métallique selon la revendication 40,
**caractérisé en ce que**
les parties d'assemblage auxiliaires sont constituées de rivets pleins (246).

43. Plancher métallique selon la revendication 42,
**caractérisé en ce que**
les parties d'assemblage auxiliaires présentent avant et après assemblage des parties de paroi (241, 242), une conformation extérieure sensiblement inchangée.

44. Plancher métallique selon au moins l'une quelconque revendications 40 à 43,
**caractérisé en ce que**
les parties d'assemblage auxiliaires sont formées de bossages et/ou cavités répartis sur leur périphérie.

45. Plancher métallique selon la revendication 44,
**caractérisé en ce que**
des rainures annulaires (251) sont prévues comme cavités.

46. Plancher métallique selon au moins l'une quelconque revendications 40 à 45,
**caractérisé en ce que**
les parties d'assemblage auxiliaires forment au moins l'une des parties de paroi d'une tête de fermeture (229, 249).

47. Plancher métallique selon au moins l'une quelconque revendications 1 à 39,
**caractérisé en ce que**
les structures de liaison (191.1, 191.2 ; 196.1, 196.2, 196.3 ; 203.1, 203.2, 203.3 ; 305, 335, 365) sont exclusivement formées avec les parties de paroi (301, 302 ; 331, 332 ; 361, 362) se faisant face.
